# EUROPEAN PATENT APPLICATION

(11) **EP 4 556 935 A1**
(43) Date of publication of application: **21.05.2025**
(21) Application number: 23856431.4
(22) Date of filing: 02.08.2023
(51) Int. Cl.: G01S 5/18, G01S 5/26

(54) **METHOD FOR SENDING SOUND SIGNAL, METHOD FOR RECEIVING SOUND SIGNAL, AND METHOD FOR DETECTING RELATIVE POSITION OF DEVICES**

(30) Priority: 26.08.2022 CN 202211035615
(71) Applicant: Huawei Technologies Co., Ltd., Shenzhen, Guangdong 518129 (CN)
(72) Inventor: LI, Shiming, Shenzhen, Guangdong 518129 (CN); MENG, Shutong, Shenzhen, Guangdong 518129 (CN)
(74) Representative: Maiwald GmbH
(86) International application number: PCT/CN2023/110850
(87) International publication number: WO 2024/041341

(57) **Abstract**

A method for sending a sound signal, a method for receiving a sound signal, and a method for detecting a relative position between devices are provided, and relate to the field of terminal technologies. The method is applied to a system. A first device includes a first speaker, a second speaker, and a third speaker. The first speaker and the second speaker are on a first side of a first plane, the third speaker is on a second side of the first plane, the first speaker and the third speaker are on a third side of a second plane, and the second speaker is on a fourth side of the second plane. The first plane is not parallel to the second plane. The method includes: The first device sends a first sound signal through the first speaker and the second speaker, and sends a second sound signal through the third speaker (S3201 and S3401); and a second device determines a first relative position between the second device and the first device based on a first arrival moment of the first sound signal and a second arrival moment of the second sound signal (S3403). **In** this way, costs of detecting a relative position between devices are reduced.

## Description

This application claims priority to Chinese Patent Application No. 202211035615.9, filed with the China National Intellectual Property Administration on August 26, 2022 and entitled "METHOD FOR SENDING SOUND SIGNAL, METHOD FOR RECEIVING SOUND SIGNAL, AND METHOD FOR DETECTING RELATIVE POSITION BETWEEN DEVICES", which is incorporated herein by reference in its entirety.

### TECHNICAL FIELD

This application relates to the field of terminal technologies, and in particular, to a method for sending a sound signal, a method for receiving a sound signal, and a method for detecting a relative position between devices.

### BACKGROUND

With continuous development of terminal technologies, various terminal devices are widely applied, and types and a quantity of terminal devices owned by a user are increasing. To implement a plurality of purposes such as mutual collaboration between devices, a relative position between terminal devices usually needs to be determined.

In the conventional technology, a relative position between two terminal devices may be determined by using a dedicated component like a radar. However, costs of detecting the relative position between the devices by using the dedicated component like the radar are usually high.

### SUMMARY

In view of this, this application provides a method for sending a sound signal, a method for receiving a sound signal, and a method for detecting a relative position between devices, to reduce costs of detecting a relative position between devices.

To achieve the foregoing objective, according to a first aspect, an embodiment of this application provides a method for sending a sound signal, applied to a first device, where the first device includes at least a first speaker, a second speaker, and a third speaker.

The first speaker and the second speaker are on a first side of a first plane, the third speaker is on a second side of the first plane, the first speaker and the third speaker are on a third side of a second plane, the second speaker is on a fourth side of the second plane, and the first plane is not parallel to the second plane.

The method includes:
the first device sends a first sound signal through the first speaker and the second speaker, and sends a second sound signal through the third speaker; and
the first device switches, in response to detecting a first event, to sending a third sound signal through the first speaker and the third speaker, and sending a fourth sound signal through the second speaker.

In this embodiment of this application, the first device includes at least the first speaker, the second speaker, and the third speaker. The first speaker and the second speaker are on the first side of the first plane, the third speaker is on the second side of the first plane, the first speaker and the third speaker are on the third side of the second plane, the second speaker is on the fourth side of the second plane, and the first plane is not parallel to the second plane. The first device may first send the first sound signal through the first speaker and the second speaker and send the second sound signal through the third speaker, and switch, in response to detecting the first event, to sending the third sound signal through the first speaker and the third speaker, and sending the fourth sound signal through the second speaker. In other words, in response to the first event, a relative position between speakers that send sound signals may be switched, so that a relative position between the first device and another device may be updated. This improves accuracy of detecting the relative position between the first device and the another device.

In some examples, the first device further includes a fourth speaker, and the fourth speaker is on the second side of the first plane and on the fourth side of the second plane.

That the first device sends a first sound signal through the first speaker and the second speaker, and sends a second sound signal through the third speaker includes:
the first device sends the first sound signal through the first speaker and the second speaker, and sends the second sound signal through the third speaker and the fourth speaker.

That the first device switches, in response to detecting a first event, to sending a third sound signal through the first speaker and the third speaker, and sending a fourth sound signal through the second speaker includes:
the first device switches, in response to detecting the first event, to sending the third sound signal through the first speaker and the third speaker, and sending the fourth sound signal through the second speaker and the fourth speaker.

In some examples, at least one of the first sound signal and the second sound signal is the same as at least one of the third sound signal and the fourth sound signal.

In some examples, the first event includes at least one of the following:
a posture of the first device changes;
a display mode of the first device changes;
the first device establishes a communication connection to a second device;
the first device discovers the second device;
the first device receives a first request sent by the second device, where the first request is used to trigger the first device to detect a relative position relationship between the first device and the second device; and
the first device receives a second request sent by the second device, where the second request is used to request to trigger the first device to switch a sound emission mode.

In some examples, the first event includes that a posture of the second device changes.

In some examples, the display mode may include landscape display and portrait display, and a change of the display mode may include: changing from the landscape display to the portrait display, or changing from the portrait display to the landscape display. In some examples, the display mode may include primary-screen display and secondary-screen display, and a change of the display mode may include: changing from the primary-screen display to the secondary-screen display, or changing from the secondary-screen display to the primary-screen display. In some examples, the display mode may include split-screen display and full-screen display, and a change of the display mode may include: changing from the split-screen display to the full-screen display, or changing from the full-screen display to the split-screen display.

In some examples, a posture change of the first device or the second device may include movement, shaking, rotation, and the like. In some examples, a second event may include an event in which an amplitude of the posture change of the first device or the second device is greater than a preset amplitude threshold. The amplitude threshold may indicate sensitivity of the operation of detecting a relative position between the first device and the second device to the posture change of the first device or the second device. When the amplitude threshold is small, the relative position relationship between the first device and the second device may be detected when the amplitude of the posture change of the first device or the second device is small, and a frequency of detecting the relative position relationship is small. When the amplitude threshold is large, the relative position relationship between the first device and the second device may be detected when the amplitude of the posture change of the first device or the second device is large, and a frequency of detecting the relative position relationship is large. In some examples, the second event may be that an angle of rotation of the first device is greater than or equal to 90 degrees, or an angle of rotation of the second device is greater than or equal to 90 degrees.

The first device may switch a sound signal sending manner in response to detecting the first event. Therefore, when the first event occurs, for example, the posture of the first device changes, the display mode of the first device changes, the first device establishes the communication connection to the second device, the first device discovers the second device, the first device receives the first request sent by the second device, the first device receives the second request sent by the second device, or the posture of the second device changes, another device can accurately determine a relative position between the another device and the first device in a timely manner based on a sound emission mode obtained through switching. This improves accuracy of detecting the relative position between the another device and the first device.

In some examples, a display of the first device includes a group of opposite longer edges and a group of opposite shorter edges.

The first plane and the second plane are perpendicular to each other, and the first plane and the second plane are perpendicular to a plane on which the display is located.

The first plane is parallel to the longer edge, and the second plane is parallel to the shorter edge; or the first plane is parallel to the shorter edge, and the second plane is parallel to the longer edge.

In some examples, the first device may send the first sound signal through the first speaker and the second speaker, send the second sound signal through the third speaker (and the fourth speaker), send the third sound signal through the first speaker and the third speaker, and send the fourth sound signal through the second speaker (and the fourth speaker).

According to a second aspect, an embodiment of this application provides a method for receiving a sound signal, applied to a first device, where the first device includes at least a first microphone, a second microphone, and a third microphone.

The first microphone and the second microphone are on a first side of a first plane, the third microphone is on a second side of the first plane, the first microphone and the third microphone are on a third side of a second plane, the second microphone is on a fourth side of the second plane, and the first plane is not parallel to the second plane.

The method includes:
the first device receives a first sound signal through the first microphone and the second microphone, and receives a second sound signal through the third microphone; and
the first device switches, in response to detecting a first event, to receiving a third sound signal through the first microphone and the third microphone, and receiving a fourth sound signal through the second microphone.

In this embodiment of this application, the first device includes at least the first microphone, the second microphone, and the third microphone. The first microphone and the second microphone are on the first side of the first plane, the third microphone is on the second side of the first plane, the first microphone and the third microphone are on the third side of the second plane, the second microphone is on the fourth side of the second plane, and the first plane is not parallel to the second plane. The first device may first receive the first sound signal through the first microphone and the second microphone and receive the second sound signal through the third microphone, and switch, in response to detecting the first event, to receiving the third sound signal through the first microphone and the third microphone, and receiving the fourth sound signal through the second microphone. In other words, in response to the first event, a relative position between microphones that receive sound signals may be switched, so that a relative position between the first device and another device may be updated. This improves accuracy of detecting the relative position between the first device and the another device.

In some examples, the first device further includes a fourth microphone, and the fourth microphone is on the second side of the first plane and on the fourth side of the second plane.

That the first device receives a first sound signal through the first microphone and the second microphone, and receives a second sound signal through the third microphone includes:
the first device receives the first sound signal through the first microphone and the second microphone, and receives the second sound signal through the third microphone and the fourth microphone.

That the first device switches, in response to detecting a first event, to sending a third sound signal through the first microphone and the third microphone, and sending a fourth sound signal through the second microphone includes:
the first device switches, in response to detecting the first event, to sending the third sound signal through the first microphone and the third microphone, and sending the fourth sound signal through the second microphone and the fourth microphone.

In some examples, the first event includes at least one of the following:
a posture of the first device changes;
a display mode of the first device changes;
the first device establishes a communication connection to a second device;
the first device discovers the second device;
the first device receives a first request sent by the second device, where the first request is used to trigger the first device to detect a relative position relationship between the first device and the second device; and
the first device receives a second request sent by the second device, where the second request is used to request to trigger the first device to switch a sound receiving mode.

**In** some examples, the first event includes that a posture of the second device changes.

The first device may switch a sound signal receiving manner in response to detecting the first event. Therefore, when the first event occurs, for example, the posture of the first device changes, the display mode of the first device changes, the first device establishes the communication connection to the second device, the first device discovers the second device, the first device receives the first request sent by the second device, the first device receives the second request sent by the second device, or the posture of the second device changes, the first device can accurately determine a relative position between the first device and another device in a timely manner based on a sound emission mode obtained through switching. This improves accuracy of detecting the relative position between the first device and the another device.

In some examples, a display of the first device includes a group of opposite longer edges and a group of opposite shorter edges.

The first plane and the second plane are perpendicular to each other, and the first plane and the second plane are perpendicular to a plane on which the display is located.

The first plane is parallel to the longer edge, and the second plane is parallel to the shorter edge; or the first plane is parallel to the shorter edge, and the second plane is parallel to the longer edge.

In some examples, the first device may receive the first sound signal through the first microphone and the second microphone, receive the second sound signal through the third microphone (and the fourth microphone), receive the third sound signal through the first microphone and the third microphone, and receive the fourth sound signal through the second microphone (and the fourth microphone).

According to a third aspect, an embodiment of this application provides a method for detecting a relative position between devices, applied to a system including a first device and a second device, where the first device includes at least a first speaker, a second speaker, and a third speaker.

The first speaker and the second speaker are on a first side of a first plane, the third speaker is on a second side of the first plane, the first speaker and the third speaker are on a third side of a second plane, the second speaker is on a fourth side of the second plane, and the first plane is not parallel to the second plane.

The method includes:
the first device sends a first sound signal through the first speaker and the second speaker, and sends a second sound signal through the third speaker;
the second device receives the first sound signal and the second sound signal; and
the second device determines a first relative position between the second device and the first device based on a first arrival moment of the first sound signal and a second arrival moment of the second sound signal.

In this embodiment of this application, the first device includes at least the first speaker, the second speaker, and the third speaker. The first speaker and the second speaker are on the first side of the first plane, the third speaker is on the second side of the first plane, the first speaker and the third speaker are on the third side of the second plane, the second speaker is on the fourth side of the second plane, and the first plane is not parallel to the second plane. The first device may send the first sound signal through the first speaker and the second speaker, and send the second sound signal through the third speaker. The second device may receive the first sound signal and the second sound signal, and determine the first relative position between the second device and the first device based on the first arrival moment of the first sound signal and the second arrival moment of the second sound signal. In other words, a relative position between devices is accurately detected through a speaker and a microphone, without relying on a component like a radar. This reduces costs of detecting the relative position between the devices.

In some examples, that the first device sends a first sound signal through the first speaker and the second speaker, and sends a second sound signal through the third speaker includes:
in response to detecting a second event, the first device sends the first sound signal through the first speaker and the second speaker, and sends the second sound signal through the third speaker.

In some examples, the second event includes any one of the following:
the first device establishes a communication connection to the second device;
the first device discovers the second device; and
the first device receives a first request sent by the second device, where the first request is used to trigger the first device to detect a relative position relationship between the first device and the second device.

In some examples, the second event includes that a posture of the second device changes.

The first device may send a sound signal through a specific speaker in response to detecting the second event. Therefore, when the second event occurs, for example, the first device establishes the communication connection to the second device, the first device discovers the second device, the first device receives the first request sent by the second device, or the posture of the second device changes, another device can accurately determine a relative position between the another device and the first device in a timely manner based on the sound signal sent by the first device.

In some examples, the method further includes:
the second device notifies the first device of the first relative position.

In some examples, the method further includes:
the first device and the second device collaboratively process a first task in a first collaboration mode corresponding to the first relative position.

In some examples, that the first device and the second device collaboratively process a first task in a first collaboration mode corresponding to the first relative position includes:
when the first relative position is that the second device is on a left side of the first device, the first device displays a first interface, and the second device displays a second interface; or
when the first relative position is that the second device is on a right side of the first device, the first device displays the first interface, and the second device displays a third interface.

The second interface is correlated with the first interface, and the third interface is correlated with the first interface.

The first device and the second device may collaboratively process the first task based on the first collaboration mode corresponding to the first relative position. In other words, a manner of collaboratively processing the first task corresponds to the first relative position. This improves reliability and user experience of collaboratively processing the first task.

In some examples, the method further includes:
the first device switches, in response to detecting a first event, to sending a third sound signal through the first speaker and the third speaker, and sending a fourth sound signal through the second speaker;
the second device receives the third sound signal and the fourth sound signal; and
the second device determines a second relative position between the second device and the first device based on a third arrival moment of the third sound signal and a fourth arrival moment of the fourth sound signal.

In some examples, the first event includes at least one of the following:
a posture of the first device changes;
a display mode of the first device changes; and
the first device receives a second request sent by the second device, where the second request is used to trigger the first device to switch a sound emission mode.

The first device may switch a sound signal sending manner in response to detecting the first event. Therefore, when the first event occurs, for example, the posture of the first device changes, the display mode of the first device changes, or the first device receives the second request sent by the second device, another device can accurately determine a relative position between the another device and the first device in a timely manner based on a sound emission mode obtained through switching. This improves accuracy of detecting the relative position between the another device and the first device.

In some examples, at least one of the first sound signal and the second sound signal is the same as at least one of the third sound signal and the fourth sound signal.

In some examples, a first sound emission moment is the same as a second sound emission moment, and a sound feature of the first sound signal is different from a sound feature of the second sound signal.

Alternatively, a first sound emission moment is different from a second sound emission moment, and a sound feature of the first sound signal is the same as a sound feature of the second sound signal.

The first sound emission moment is a moment at which the first device sends the first sound signal, and the second sound emission moment is a moment at which the first device sends the second sound signal.

In some examples, a display of the first device includes a group of opposite longer edges and a group of opposite shorter edges.

The first plane and the second plane are perpendicular to each other, and the first plane and the second plane are perpendicular to a plane on which the display is located.

The first plane is parallel to the longer edge, and the second plane is parallel to the shorter edge; or the first plane is parallel to the shorter edge, and the second plane is parallel to the longer edge.

In some examples, the first sound signal and the second sound signal are ultrasonic signals.

In some examples, the third sound signal and the fourth sound signal are ultrasonic signals.

In some examples, the first device further includes a fourth speaker, and the fourth speaker is on the second side of the first plane and on the fourth side of the second plane.

That the first device sends a first sound signal through the first speaker and the second speaker, and sends a second sound signal through the third speaker includes:
the first device sends the first sound signal through the first speaker and the second speaker, and sends the second sound signal through the third speaker and the fourth speaker.

That the first device sends a third sound signal through the first speaker and the third speaker, and sends a fourth sound signal through the second speaker includes:
the first device sends the third sound signal through the first speaker and the third speaker, and sends the fourth sound signal through the second speaker and the fourth speaker.

In some examples, the first device may send the first sound signal through the first speaker and the second speaker, send the second sound signal through the third speaker (and the fourth speaker), send the third sound signal through the first speaker and the third speaker, and send the fourth sound signal through the second speaker (and the fourth speaker). The second device determines the first relative position between the second device and the first device based on the first arrival moment of the first sound signal and the second arrival moment of the second sound signal. A third device determines a fifth relative position between the third device and the first device based on the third arrival moment of the third sound signal and the fourth arrival moment of the fourth sound signal. In other words, the first device may send a plurality of groups of sound signals through a plurality of groups of speakers, so that a plurality of devices can determine relative positions between the plurality of devices and the first device. This greatly improves efficiency of detecting the relative positions between the devices.

According to a fourth aspect, an embodiment of this application provides a method for detecting a relative position between devices, applied to a system including a first device and a second device, where the first device includes at least a first microphone, a second microphone, and a third microphone.

The first microphone and the second microphone are on a first side of a first plane, the third microphone is on a second side of the first plane, the first microphone and the third microphone are on a third side of a second plane, the second microphone is on a fourth side of the second plane, and the first plane is not parallel to the second plane.

The method includes:
the second device sends a first sound signal and a second sound signal;
the first device receives the first sound signal through the first microphone and the second microphone, and receives the second sound signal through the third microphone; and
the first device determines a first relative position between the second device and the first device based on a first arrival moment of the first sound signal and a second arrival moment of the second sound signal.

In this embodiment of this application, the first device includes at least the first microphone, the second microphone, and the third microphone. The first microphone and the second microphone are on the first side of the first plane, the third microphone is on the second side of the first plane, the first microphone and the third microphone are on the third side of the second plane, the second microphone is on the fourth side of the second plane, and the first plane is not parallel to the second plane. The second device may send the first sound signal and the second sound signal. The first device may receive the first sound signal through the first microphone and the second microphone, receive the second sound signal through the third microphone, and determine the first relative position between the second device and the first device based on the first arrival moment of the first sound signal and the second arrival moment of the second sound signal. In other words, a relative position between devices is accurately detected through a speaker and a microphone, without relying on a component like a radar. This reduces costs of detecting the relative position between the devices.

In some examples, that the first device receives the first sound signal through the first microphone and the second microphone, and receives the second sound signal through the third microphone includes:
in response to detecting a second event, the first device receives the first sound signal through the first microphone and the second microphone, and receives the second sound signal through the third microphone.

In some examples, the second event includes any one of the following:
the first device establishes a communication connection to the second device;
the first device discovers the second device; and
the first device receives a first request sent by the second device, where the first request is used to trigger the first device to detect a relative position relationship between the first device and the second device.

In some examples, the first event includes that a posture of the second device changes.

The first device may receive a sound signal through a specific microphone in response to detecting the second event. Therefore, when the second event occurs, for example, the first device establishes the communication connection to the second device, the first device discovers the second device, the first device receives the first request sent by the second device, or the posture of the second device changes, the first device can accurately determine the relative position between the first device and the first device in a timely manner based on the received sound signal.

In some examples, the method further includes:
the second device sends a third sound signal and a fourth sound signal;
the first device switches, in response to detecting a first event, to receiving the third sound signal through the first microphone and the third microphone, and receiving the fourth sound signal through the second microphone; and
the second device determines a second relative position between the second device and the first device based on a third arrival moment of the third sound signal and a fourth arrival moment of the fourth sound signal.

In some examples, the first event includes at least one of the following:
a posture of the first device changes;
a display mode of the first device changes; and
the first device receives a second request sent by the second device, where the second request is used to trigger the first device to switch a sound receiving mode.

The first device may switch a sound signal receiving manner in response to detecting the first event. Therefore, when the first event occurs, for example, the posture of the first device changes, the display mode of the first device changes, or the first device receives the second request sent by the second device, the first device can accurately determine a relative position between the first device and another device in a timely manner based on a sound emission mode obtained through switching. This improves accuracy of detecting the relative position between the first device and the another device.

In some examples, the first device further includes a fourth microphone, and the fourth microphone is on the second side of the first plane and on the fourth side of the second plane.

That the first device receives a first sound signal through the first microphone and the second microphone, and receives a second sound signal through the third microphone includes:
the first device receives the first sound signal through the first microphone and the second microphone, and receives the second sound signal through the third microphone and the fourth microphone.

That the first device sends a third sound signal through the first microphone and the third microphone, and sends a fourth sound signal through the second microphone includes:
the first device sends the third sound signal through the first microphone and the third microphone, and sends the fourth sound signal through the second microphone and the fourth microphone.

In some examples, the first device may receive, through the first microphone and the second microphone, the first sound signal sent by the second device, receive, through the third microphone (and the fourth microphone), the second sound signal sent by the second device, receive, through the first microphone and the third microphone, the third sound signal sent by the third device, and receive, through the second microphone (and the fourth microphone), the fourth sound signal sent by the third device, so that the first device can determine the first relative position between the second device and the first device based on the first arrival moment of the first sound signal and the second arrival moment of the second sound signal, and determine a fifth relative position between a third device and the first device based on the third arrival moment of the third sound signal and the fourth arrival moment of the fourth sound signal. In other words, the first device may receive a plurality of groups of sound signals through a plurality of groups of microphones, so that relative positions between a plurality of devices and the first device can be determined. This greatly improves efficiency of detecting the relative positions between the devices.

According to a fifth aspect, an embodiment of this application provides a system, where the system includes a first device and a second device, the first device includes at least a first speaker, a second speaker, and a third speaker, the first speaker and the second speaker are on a first side of a first plane, the third speaker is on a second side of the first plane, the first speaker and the third speaker are on a third side of a second plane, the second speaker is on a fourth side of the second plane, and the first plane is not parallel to the second plane.

The first device is configured to: send a first sound signal through the first speaker and the second speaker, and send a second sound signal through the third speaker.

The second device is configured to receive the first sound signal and the second sound signal; and the second device determines a first relative position between the second device and the first device based on a first arrival moment of the first sound signal and a second arrival moment of the second sound signal.

According to a sixth aspect, an embodiment of this application provides a system, where the system includes a first device and a second device, the first device includes at least a first microphone, a second microphone, and a third microphone, the first microphone and the second microphone are on a first side of a first plane, the third microphone is on a second side of the first plane, the first microphone and the third microphone are on a third side of a second plane, the second microphone is on a fourth side of the second plane, and the first plane is not parallel to the second plane.

The second device is configured to send a first sound signal and a second sound signal.

The first device is configured to: receive the first sound signal through the first microphone and the second microphone, and receive the second sound signal through the third microphone; and the first device determines a first relative position between the second device and the first device based on a first arrival moment of the first sound signal and a second arrival moment of the second sound signal.

According to a seventh aspect, an embodiment of this application provides an apparatus. The apparatus has a function of implementing behavior of the terminal device according to the foregoing aspects and the possible implementations of the foregoing aspects. The function may be implemented by hardware, or may be implemented by executing corresponding software by hardware. The hardware or the software includes one or more modules or units corresponding to the function, for example, a transceiver module or unit, a processing module or unit, and an obtaining module or unit.

According to an eighth aspect, an embodiment of this application provides a terminal device, including a memory and a processor. The memory is configured to store a computer program, and the processor is configured to perform the method according to any one of the first aspect or the method according to any one of the second aspect when invoking the computer program.

According to a ninth aspect, an embodiment of this application provides a chip system. The chip system includes a processor. The processor is coupled to a memory, and the processor executes a computer program stored in the memory, to implement the method according to any one of the first aspect or the method according to any one of the second aspect.

The chip system may be a single chip or a chip module including a plurality of chips.

According to a tenth aspect, an embodiment of this application provides a computer-readable storage medium. The computer-readable storage medium stores a computer program, and when the computer program is executed by a processor, the method according to any one of the first aspect or the method according to any one of the second aspect is implemented.

According to an eleventh aspect, an embodiment of this application provides a computer program product. When the computer program product runs on a terminal device, the terminal device is enabled to perform the method according to any one of the first aspect or the method according to any one of the second aspect.

It may be understood that, for beneficial effect of the fifth aspect to the eleventh aspect, refer to related descriptions of the first aspect, the second aspect, the third aspect, or the fourth aspect. Details are not described herein again.

### BRIEF DESCRIPTION OF DRAWINGS

FIG. 1 is a diagram of a structure of a terminal device according to an embodiment of this application;
FIG. 2 is a diagram of a structure of another terminal device according to an embodiment of this application;
FIG. 3 is a diagram of a structure of another terminal device according to an embodiment of this application;
FIG. 4 is a diagram of an architecture of a system according to an embodiment of this application;
FIG. 5 is a diagram of an architecture of another system according to an embodiment of this application;
FIG. 6 is a diagram of an architecture of another system according to an embodiment of this application;
FIG. 7 is a diagram of an architecture of another system according to an embodiment of this application;
FIG. 8 is a diagram of an architecture of another system according to an embodiment of this application;
FIG. 9 is a diagram of an architecture of another system according to an embodiment of this application;
FIG. 10 is a diagram of a sound signal propagation process according to an embodiment of this application;
FIG. 11 is a diagram of a sound signal propagation process according to an embodiment of this application;
FIG. 12 is a schematic flowchart of a method for detecting a relative position between devices according to an embodiment of this application;
FIG. 13 is a schematic flowchart of another method for detecting a relative position between devices according to an embodiment of this application;
FIG. 14 is a flowchart of another method for detecting a relative position between devices according to an embodiment of this application;
FIG. 15 is a flowchart of a speaker grouping method according to an embodiment of this application;
FIG. 16 is a diagram of a structure of another terminal device according to an embodiment of this application;
FIG. 17 is a diagram of a display mode according to an embodiment of this application;
FIG. 18 is a diagram of another display mode according to an embodiment of this application;
FIG. 19 is a schematic flowchart of another method for detecting a relative position between devices according to an embodiment of this application;
FIG. 20 is a schematic flowchart of another method for detecting a relative position between devices according to an embodiment of this application;
FIG. 21 is a flowchart of another method for detecting a relative position between devices according to an embodiment of this application;
FIG. 22 is a flowchart of a microphone grouping method according to an embodiment of this application;
FIG. 23 is a diagram of a structure of another terminal device according to an embodiment of this application;
FIG. 24 is a schematic flowchart of a multi-device collaborative task processing method according to an embodiment of this application;
FIG. 25 is a diagram of a collaboration scenario according to an embodiment of this application;
FIG. 26 is a diagram of another collaboration scenario according to an embodiment of this application;
FIG. 27 is a diagram of another collaboration scenario according to an embodiment of this application;
FIG. 28 is a diagram of another collaboration scenario according to an embodiment of this application;
FIG. 29 is a diagram of another collaboration scenario according to an embodiment of this application;
FIG. 30 is a diagram of another collaboration scenario according to an embodiment of this application;
FIG. 31 is a diagram of another collaboration scenario according to an embodiment of this application;
FIG. 32 is a schematic flowchart of a method for sending a sound signal according to an embodiment of this application;
FIG. 33 is a schematic flowchart of a method for receiving a sound signal according to an embodiment of this application;
FIG. 34 is a schematic flowchart of another method for detecting a relative position between devices according to an embodiment of this application; and
FIG. 35 is a schematic flowchart of another method for detecting a relative position between devices according to an embodiment of this application.

### DESCRIPTION OF EMBODIMENTS

A method for detecting a relative position between devices provided in embodiments of this application may be applied to a terminal device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

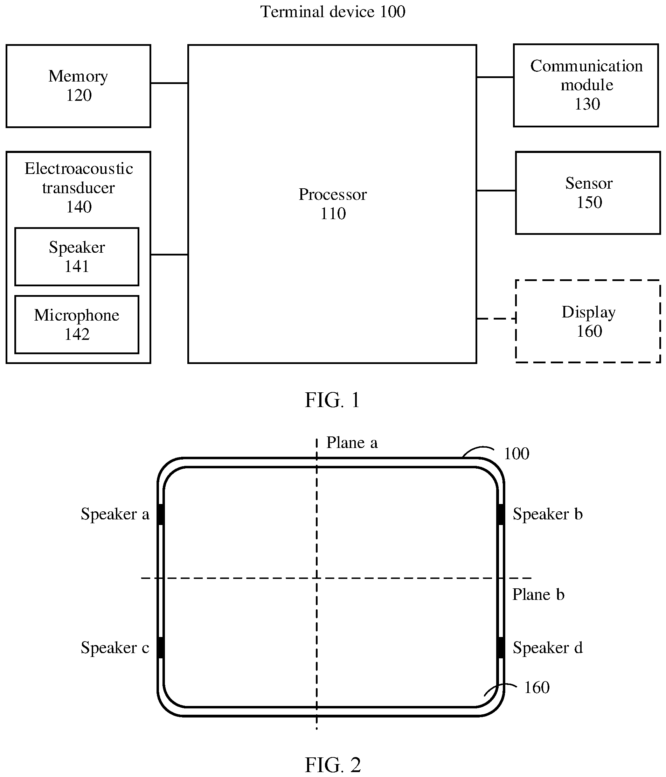

FIG. 1 is a diagram of a structure of a terminal device 100 according to an embodiment of this application. The terminal device 100 may include a processor 110, a memory 120, a communication module 130, an electroacoustic transducer 140, a sensor 150, and the like.

The processor 110 may include one or more processing units. The memory 120 is configured to store program code and data. In this embodiment of this application, the processor 110 may execute computer-executable instructions stored in the memory 120, to control and manage an action of the terminal device 100.

The communication module 130 may be used for communication between internal modules of the terminal device 100, communication between the terminal device 100 and another external terminal device, or the like. For example, if the terminal device 100 communicates with another terminal device in a wired connection manner, the communication module 130 may include an interface, for example, a USB interface. The USB interface may be an interface that conforms to a USB standard specification, and may be specifically a mini USB interface, a micro USB interface, a USB Type-C interface, or the like. The USB interface may be configured to connect to a charger to charge the terminal device 100, or may be configured to transmit data between the terminal device 100 and a peripheral device, or may be configured to connect to a headset for playing audio through the headset. The interface may be further configured to connect to another terminal device, for example, an AR device.

Alternatively, the communication module 130 may include an audio component, a radio frequency circuit, a Bluetooth chip, a wireless fidelity (wireless fidelity, Wi-Fi) chip, a near-field communication (near-field communication, NFC) module, and the like, and interaction between the terminal device 100 and the another terminal device may be implemented in a plurality of different manners.

The electroacoustic transducer 140 may be configured to perform mutual conversion between a sound signal and an electrical signal. In some examples, the electroacoustic transducer 140 may be configured to convert a sound signal into an electrical signal, and/or convert an electrical signal into a sound signal. When the electroacoustic transducer 140 is configured to convert an electrical signal into a sound signal, the electroacoustic transducer 140 may also be referred to as a speaker 141. When the electroacoustic transducer is configured to convert a sound signal into an electrical signal, the electroacoustic transducer 140 may also be referred to as a microphone 142. The terminal device 100 may include a plurality of electroacoustic transducers, and the plurality of electroacoustic transducers may be distributed in different positions of the terminal device 100. In some examples, the plurality of electroacoustic transducers 140 may be distributed on a frame of the terminal device 100. In some examples, the plurality of electroacoustic transducers 140 may be evenly or symmetrically distributed on the terminal device 100. In some examples, the frame of the terminal device 100 may be a rectangle, and the frame includes two opposite longer edges and two opposite shorter edges.

In some examples, the terminal device 100 may include at least three speakers 141. The at least three speakers 141 are located in different positions of the terminal device 100. Therefore, there are at least two planes. For each plane, at least one speaker 141 exists on one side of the plane. Any two planes are not parallel. In some examples, the at least two planes include a plane a and a plane b. A display 160 of the terminal device 100 includes a group of opposite longer edges and a group of opposite shorter edges. The plane a and the plane b are perpendicular to each other, and the plane a and the plane b are perpendicular to a plane on which the display 160 is located. The plane a is parallel to the longer edge, and the plane b is parallel to the shorter edge. Alternatively, the plane a is parallel to the shorter edge, and the plane b is parallel to the longer edge.

For example, as shown in FIG. 2, the terminal device 100 includes the display 160, a speaker a, a speaker b, a speaker c, and a speaker d. The speaker a, the speaker b, the speaker c, and the speaker d are disposed on the group of shorter frames of the terminal device 100. The plane a is perpendicular to the plane b, and the plane a and the plane b are also perpendicular to the plane on which the display 160 is located. For the plane a, the speaker a and the speaker c are on a left side of the plane a, and the speaker b and the speaker d are on a right side of the plane a. For the plane b, the speaker a and the speaker b are on an upper side of the plane b, and the speaker c and the speaker d are on a lower side of the plane b.

In some examples, the terminal device 100 may include at least three microphones 142. The at least three microphones 142 are located in different positions of the terminal device 100. Therefore, there are at least two planes. For each plane, at least one microphone 142 exists on one side of the plane. Any two planes are not parallel. In some examples, the at least two planes include a plane c and a plane d. The display 160 of the terminal device 100 includes a group of opposite longer edges and a group of opposite shorter edges. The plane a and the plane b are perpendicular to each other, and the plane a and the plane b are perpendicular to a plane on which the display 160 is located. The plane a is parallel to the longer edge, and the plane b is parallel to the shorter edge. Alternatively, the plane a is parallel to the shorter edge, and the plane b is parallel to the longer edge.

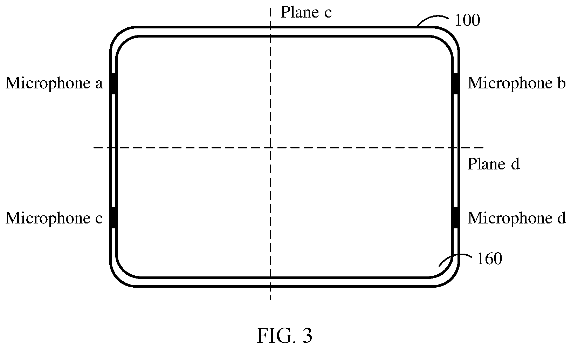

For example, as shown in FIG. 3, the terminal device 100 includes the display 160, a microphone a, a microphone b, a microphone c, and a microphone d. The microphone a, the microphone b, the microphone c, and the microphone d are disposed on the group of shorter frames of the terminal device 100. The plane c is perpendicular to the plane d, and the plane c and the plane d are also perpendicular to the plane on which the display 160 is located. For the plane c, the microphone a and the microphone c are on a left side of the plane c, and the microphone b and the microphone d are on a right side of the plane c. For the plane d, the microphone a and the microphone b are on an upper side of the plane d, and the microphone c and the microphone d are on a lower side of the plane d.

It should be noted that, if the terminal device includes at least three speakers 141 and at least three microphones 142, a quantity of the at least three speakers 141 may be the same as or different from a quantity of the at least three microphones 142, and positions of the at least three speakers 141 may be the same as or different from positions of the at least three microphones 142.

For example, with reference to FIG. 2 and FIG. 3, the terminal device includes the speaker a, the speaker b, the speaker c, and the speaker d, and further includes the microphone a, the microphone b, the microphone c, and the microphone d. The speaker a and the microphone a are located in a same position, the speaker b and the microphone b are located in a same position, the speaker c and the microphone c are located in a same position, and the speaker d and the microphone d are located in a same position. Planes a and c are the same plane, and planes b and d are the same plane. For the plane a, the speaker a, the speaker c, the microphone a, and the microphone c are on the left side of the plane a, and the speaker b, the speaker d, the microphone b, and the microphone d are on the right side of the plane a. For the plane b, the speaker a, the speaker b, the microphone a, and the microphone b are on the upper side of the plane b, and the speaker c, the speaker d, the microphone c, and the microphone d are on the lower side of the plane b.

The sensor 150 may be configured to detect a posture of the terminal device 100. In some examples, the sensor 150 may include a gyroscope sensor, an acceleration sensor, a distance sensor, and the like.

The gyroscope sensor may be configured to determine a motion posture of the terminal device 100. In some examples, an angular velocity of the terminal device 100 around three axes (namely, axes x, y, and z) may be determined by using the gyroscope sensor.

The acceleration sensor may detect accelerations of the terminal device 100 in various directions (usually on three axes). When the terminal device 100 is still, a magnitude and a direction of gravity may be detected. In some examples, the acceleration sensor may be configured to perform landscape/portrait switching.

The distance sensor may be configured to measure a distance. In some examples, based on a distance change measured by the distance sensor, the terminal device 100 may determine whether the terminal device 100 moves, or determine whether another terminal device near the terminal device 100 moves. In some examples, the distance sensor may include an optical sensor.

Optionally, the terminal device 100 may further include the display 160, and the display 160 may display an image, a video, or the like on a human-computer interaction interface.

It should be understood that, in addition to various components or modules shown in FIG. 1, the structure of the terminal device 100 is not specifically limited in embodiments of this application. In some other embodiments of this application, the terminal device 100 may further include more or fewer components than those shown in the figure, or some components may be combined, or some components may be split, or a different component arrangement may be used. The components shown in the figure may be implemented by hardware, software, or a combination of software and hardware.

A layered architecture, an event-driven architecture, a microkernel architecture, a microservice architecture, or a cloud architecture may be used for a software system of the terminal device 100. A type of the software system is not limited in embodiments of this application.

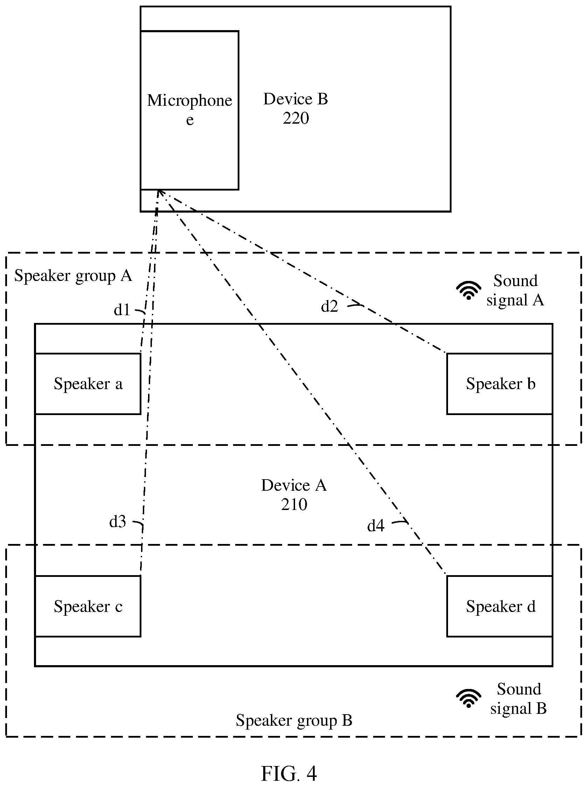

FIG. 4 is a diagram of an architecture of a system according to an embodiment of this application. The system includes a device A 210 and a device B 220. The device A 210 and the device B 220 each may be the foregoing terminal device 100. FIG. 2 may be understood as a top view of the device A 210 and the device B 220, and a type of position relationship between the device A 210 and the device B 220 may be an above-below relationship.

The device A 210 may be the terminal device 100 shown in FIG. 2.

The device B 220 may include a microphone e. The microphone e may be distributed in any position of the device B 220. In some examples, the microphone e may be distributed on a frame of the device B 220. For example, as shown in FIG. 4, a speaker C is distributed on a left shorter edge of the device B 220.

It can be learned from FIG. 4 that, the device B 220 is above the device A 210, and a distance d1 from a speaker a to the microphone e of the device B 220 and a distance d2 from a speaker b to the microphone e are less than a distance d3 from the speaker c to the microphone e and a distance d4 from a speaker d to the microphone e. It may be understood that, when the device B 220 is below the device A 210 (not shown in FIG. 4), the distance d1 from the speaker a to the microphone e and the distance d2 from the speaker b to the microphone e are greater than the distance d3 from the speaker c to the microphone e and the distance d4 from the speaker d to the microphone e. In addition, when a distance between the device A 210 and the device B 220 is longer, a difference between d1 and d2 is smaller, and a difference between d3 and d4 is smaller. When a position of the microphone e is closer to a symmetry axis parallel to a shorter edge of the device A 210, a difference between d1 and d2 is smaller, and a difference between d3 and d4 is smaller.

Because propagation media between the microphone e and the speaker a, the speaker b, the speaker c, and the speaker d may be considered to be approximately the same, when the speaker a, the speaker b, the speaker c, and the speaker d send a sound signal, propagation speeds v of transmitting the sound signal from the speakers to the microphone e are also the same. Propagation duration of propagating the sound signal from the speaker a to the microphone e is T1=d1/v, propagation duration of propagating the sound signal from the speaker b to the microphone e is T2=d2/v, propagation duration of propagating the sound signal from the speaker c to the microphone e is T3=d3/v, and propagation duration of propagating the sound signal from the speaker d to the microphone e is T4=d4/v. Because v=d1/T1=d2/T2=d3/T3=d4/T4, a value relationship between T1, T2, T3, and T4 is consistent with a value relationship between d1, d2, d3, and d4. In other words, distances from the speaker a, the speaker b, the speaker c, and the speaker d to the microphone e may be determined based on propagation duration of transmitting the sound signal from the speaker a, the speaker b, the speaker c, and the speaker d to the microphone e, to further determine that the device B 220 is above or below the device A 210.

Therefore, if it is necessary to detect that the device B 220 is above or below the device A 210, the device A 210 may send a sound signal A through a speaker group A, and send a sound signal B through a speaker group B, where the speaker group A may include at least one of the speaker a and the speaker b. The device B 220 receives the sound signal A and the sound signal B through the microphone e, determines propagation duration TA of propagating the sound signal A from the speaker group A to the microphone e, determines propagation duration TB of propagating the sound signal B from the speaker group B to the microphone e, and then determines, based on a difference between TA and TB, that the microphone e is closer to the speaker group A or closer to the speaker group B. If the microphone e is closer to the speaker group A, the device B 220 is closer to a position of the speaker group A in the device A 210. Then, in combination with that the speaker group A is on an upper side or a lower side of the device A 210, it can be determined that the device B 220 is above or below the device A 210. Similarly, if the microphone e is closer to the speaker group B, the device B 220 is closer to a position of the speaker group B in the device A 210. Then, in combination with that the speaker group B is on the upper side or the lower side of the device A 210, it can be determined that the device B 220 is above or below the device A 210. FIG. 4 is used as an example. Because the speaker group A is on the upper side of the device A 210, and the speaker group B is on the lower side of the device A 210, when the device B 220 is closer to the position of the speaker group A in the device A 210, the device B 220 is above the device A 210. Alternatively, it may be understood that, when the device B 220 is closer to the position of the speaker group B in the device A 210, the device B 220 is below the device A 210.

In some examples, if the speaker group A includes the speaker a or the speaker b, TA=T1 or TA=T2. Similarly, if the speaker group B includes the speaker c or the speaker d, TB=T3 or TB=T4.

In some examples, the speaker group A includes the speaker a and the speaker b, and the speaker group B includes the speaker c and the speaker d. In this case, TA may be positively correlated with T1 and T2, TB may be positively correlated with T3 and T4, and a positive correlation between TA and T1 and T2 is the same as a positive correlation between TB and T3 and the TA. In some examples, TA=(T1+T2)/2, and TB=(T3+T4)/2.

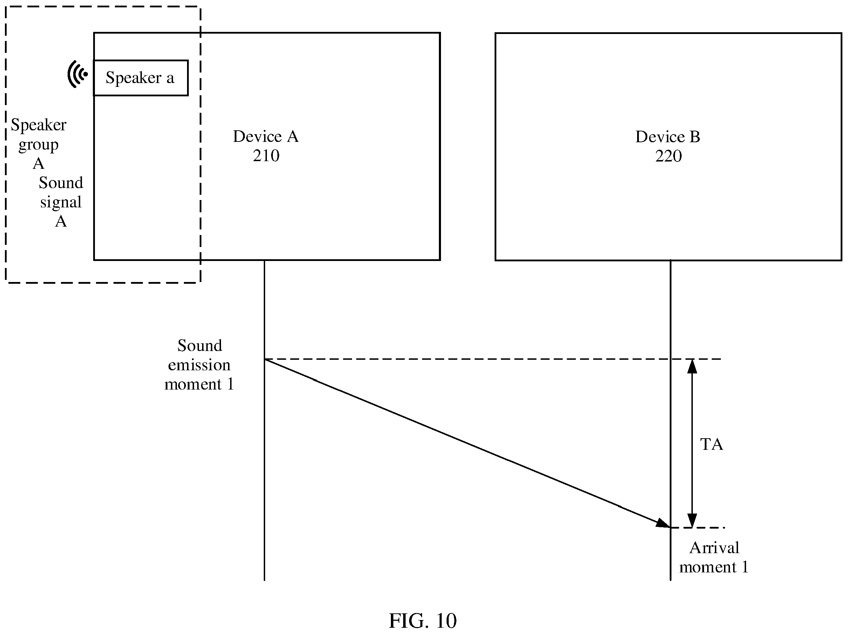

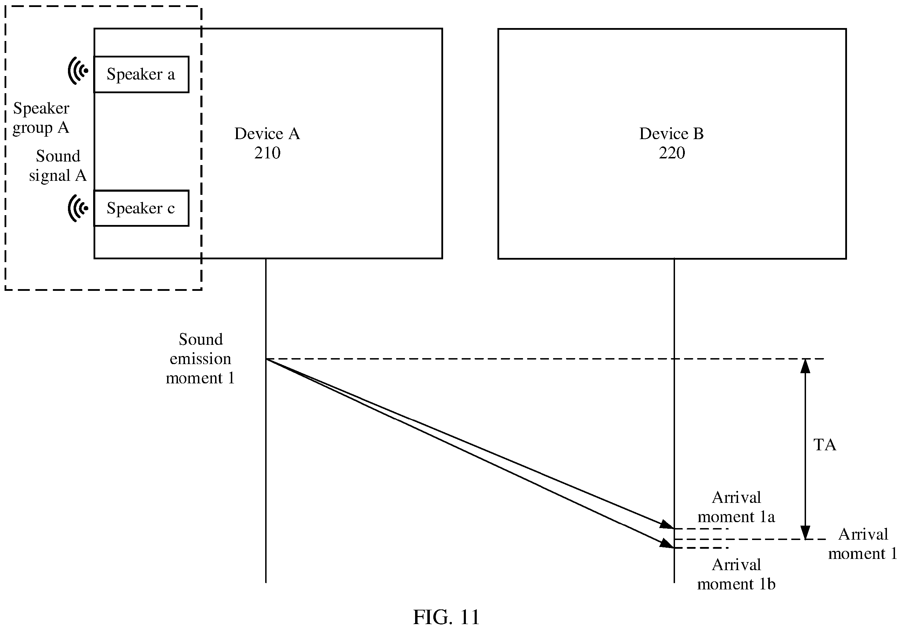

It should be noted that TA=T1, TA=T2, TB=T3, TB=T4, TA=(T1+T2)/2, and TB=(T3+T4)/2 may represent a mathematical relationship between TA and T1 and T2, and a mathematical relationship between TB and T3 and T4. In actual application, the device B 220 may directly determine TA, instead of determining T1 and T2 and then determining TA based on T1 and T2. Similarly, the device B 220 may directly determine TB, instead of determining T3 and T4 and then determining TB based on T3 and T4. For a manner of determining TA and TB, refer to the following methods shown in FIG. 10 and FIG. 11.

It should be further noted that, a difference between the sound signal A and the sound signal B may include a difference between sound emission moments and/or a difference between sound features (such as frequencies), so that a receiving device can distinguish between propagation duration of the sound signal A and propagation duration of the sound signal B. In some examples, the sound emission moments of the sound signal A and the sound signal B are the same, and the sound features of the sound signal A and the sound signal B may be different. In some other examples, the sound emission moments of the sound signal A and the sound signal B are different, and the sound features of the sound signal A and the sound signal B are the same.

It should be further noted that, although not shown in FIG. 2, it may be understood that the device A 210 may alternatively include a microphone and/or more speakers, and similarly, the device B 220 may alternatively include a speaker and/or more microphones.

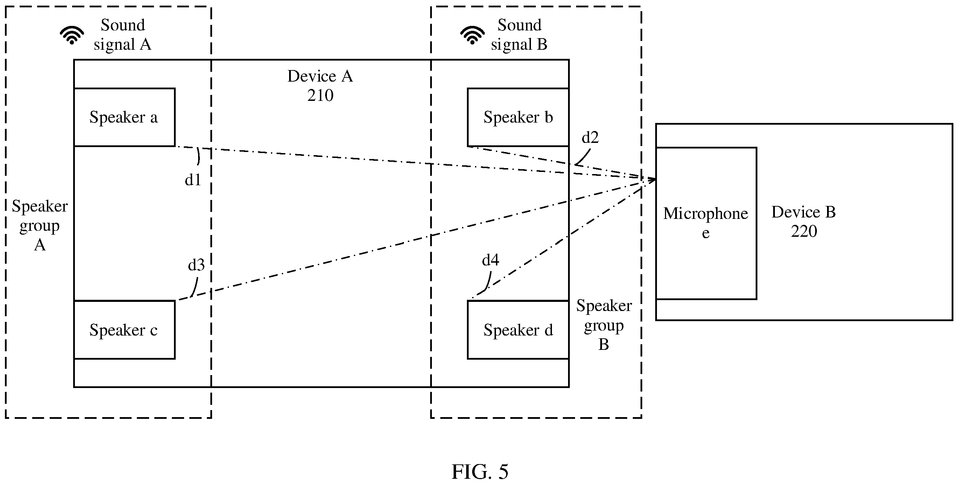

FIG. 5 is a diagram of an architecture of a system according to an embodiment of this application. A type of position relationship between a device A 210 and a device B 220 in FIG. 5 may be a left-right relationship.

It can be learned from FIG. 5 that, the device B 220 is on a right side of the device A 210, and a distance d1 from a speaker a to a microphone e of the device B 220 and a distance d3 from a speaker c to the microphone e are greater than a distance d2 from a speaker b to the microphone e and a distance d4 from a speaker d to the microphone e. It may be understood that, when the device B 220 is on a left side of the device A 210 (not shown in FIG. 5), the distance d1 from the speaker a to the microphone e and the distance d3 from the speaker c to the microphone e are less than the distance d2 from the speaker b to the microphone e and the distance d4 from the speaker d to the microphone e. In addition, when a distance between the device A 210 and the device B 220 is longer, a difference between d1 and d3 is smaller, and a difference between d2 and d4 is smaller. When a position of the microphone e is closer to a symmetry axis parallel to a longer edge of the device A 210, a difference between d1 and d3 is smaller, and a difference between d2 and d4 is smaller.

Therefore, if it is necessary to detect that the device B 220 is on the left side or the right side of the device A 210, the device B 220 receives a sound signal A and a sound signal B based on the microphone e, determines propagation duration TA of propagating the sound signal A from a speaker group A to the microphone e, determines propagation duration TB of propagating the sound signal B from a speaker group B to the microphone e, and then determines, based on a difference between TA and TB, that the microphone e is closer to the speaker group A or closer to the speaker group B, where the speaker group A may include at least one of the speaker a and the speaker c, and the speaker group B may include at least one of the speaker b and the speaker d. If the microphone e is closer to the speaker group A, the device B 220 is closer to a position of the speaker group A in the device A 210. Then, in combination with that the speaker group A is on the left side or the right side of the device A 210, it can be determined that the device B 220 is on the left side or the right side of the device A 210. Similarly, if the microphone e is closer to the speaker group B, the device B 220 is closer to a position of the speaker group B in the device A 210. Then, in combination with that the speaker group B is on the left side or the right side of the device A 210, it can be determined that the device B 220 is on the left side or the right side of the device A 210. FIG. 5 is used as an example. Because the speaker group A is on the left side of the device A 210, and the speaker group B is on the right side of the device A 210, when the device B 220 is closer to the position of the speaker group B in the device A 210, the device B 220 is on the right side of the device A 210, or it may be understood that when the device B 220 is closer to the position of the speaker group A in the device A 210, the device B 220 is on the left side of the device A 210.

In some examples, if the speaker group A includes the speaker a or the speaker c, TA=T1 or TA=T3. Similarly, if the speaker group B includes the speaker b or the speaker d, TB=T2 or TB=T4.

In some examples, the speaker group A includes the speaker a and the speaker c, and the speaker group B includes the speaker b and the speaker d. In this case, TA may be positively correlated with T1 and T3, TB may be positively correlated with T2 and T4, and a positive correlation between TA and T1 and T3 is the same as a positive correlation between TB and T2 and the T4. In some examples, TA=(T1+T3)/2, and TB=(T2+T4)/2.

It should be noted that TA=T1, TA=T3, TB=T23, TB=T4, TA=(T1+T3)/2, and TB=(T2+T4)/2 may represent a mathematical relationship between TA and T1 and T3, and a mathematical relationship between TB and T2 and T4. In actual application, the device B 220 may directly determine TA, instead of determining T1 and T3 and then determining TA based on T1 and T3. Similarly, the device B 220 may directly determine TB, instead of determining T2 and T4 and then determining TB based on T2 and T4. For a manner of determining TA and TB, refer to the method shown in FIG. 10.

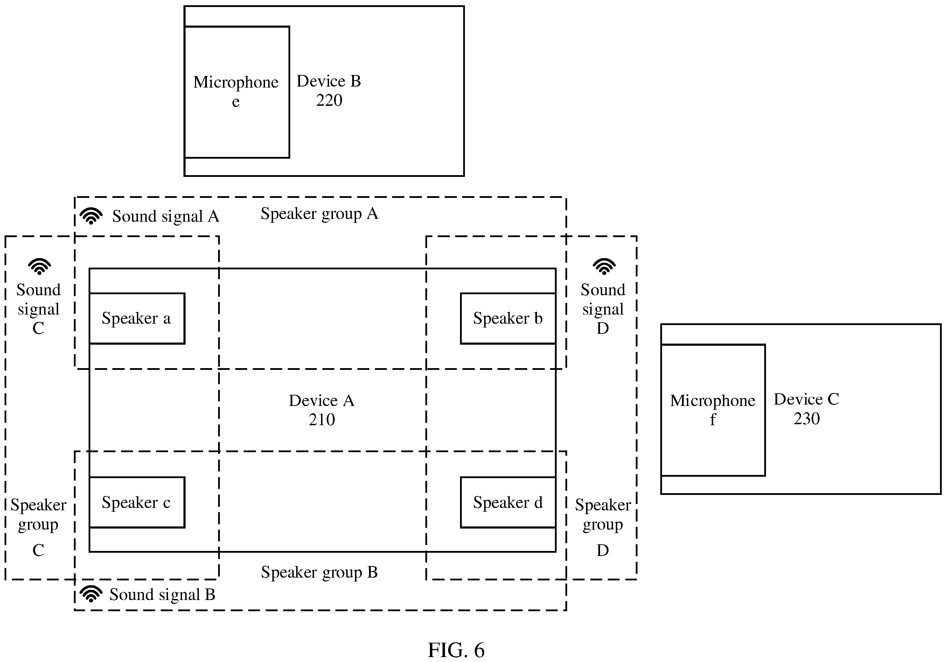

FIG. 6 is a diagram of an architecture of a system according to an embodiment of this application. The system shown in FIG. 6 may be understood as a combination of the systems shown in FIG. 4 and FIG. 5. The system in FIG. 6 further includes a device C 230. The device C 230 may be the foregoing terminal device 100. The device C 230 includes a microphone f. A type of position relationship between a device A 210 and a device B 220 may be an above-below relationship, and a type of position relationship between the device A 210 and the device C 230 may be a left-right relationship.

The device A 210 sends a sound signal A through a speaker group A, and sends a sound signal B through a speaker group B. The device B 220 receives the sound signal A and the sound signal B through a microphone e, determines propagation duration TA of propagating the sound signal A from the device A 210 to the device B 220 and propagation duration TB of propagating the sound signal B from the device A 210 to the device B 220, and determines, based on a value relationship between TA and TB, that the device B 220 is above or below the device A 210.

The device A 210 further sends a sound signal C through a speaker group C, and sends a sound signal D through a speaker group D. The device C 230 receives the sound signal C and the sound signal D through the microphone f, determines TC of propagating the sound signal C from the device A 210 to the device C 230 and TD of propagating the sound signal D from the device A 210 to the device C 230, and determines, based on a value relationship between TC and TD, whether C 230 is on the left side or the right side of the device A 210.

The speaker group A may include at least one of a speaker a and a speaker b, the speaker group B may include at least one of a speaker c and a speaker d, the speaker group C may include at least one of the speaker a and the speaker c, and the speaker group D may include at least one of the speaker b and the speaker d.

In other words, the device A 210 may include a plurality of pairs of speaker groups, each speaker group may include at least one speaker, and each pair of speaker groups are on two sides of a plane. The plane makes positions of the pair of speaker groups to conform to a type of position relationship, for example, the above-below relationship or the left-right relationship. Each pair of speaker groups may send a group of sound signals, the group of sound signals includes two types of sound signals, each type of sound signal is sent by speakers in different speaker groups, and the two types of sound signals have different sound emission moments and/or sound features. Therefore, another device determines a specific relative position between the another device and the device A 210 based on the two sound signals. This improves efficiency of detecting the relative position between the devices.

It should be noted that a difference between the sound signal C and the sound signal D may be the same as a difference between the sound signal A and the sound signal B.

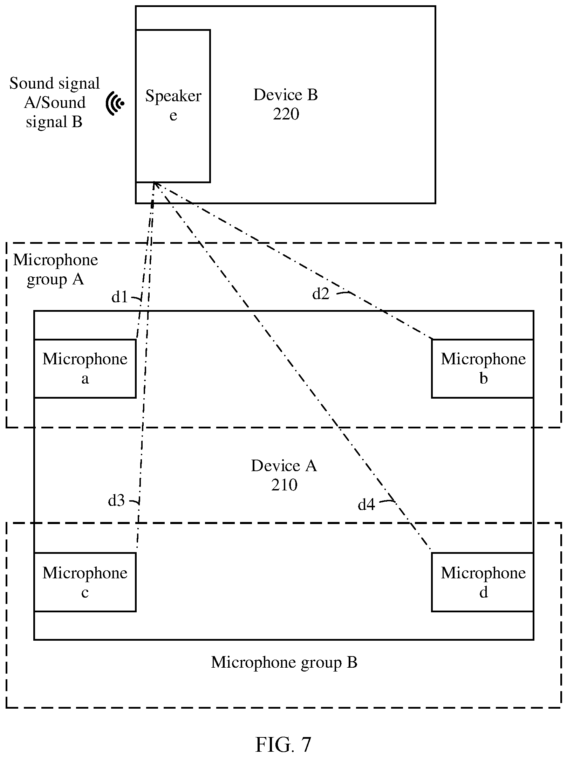

FIG. 7 is a diagram of an architecture of a system according to an embodiment of this application. A type of position relationship between the device A 210 and the device B 220 may be an above-below relationship.

The device A 210 may be the terminal device 100 shown in FIG. 3.

The device B 220 may include a speaker e. The speaker e may be distributed in any position of the device B 220. In some examples, the speaker e may be distributed on a frame of the device B 220. For example, as shown in FIG. 7, the speaker e is distributed on a left shorter edge of the device B 220.

It can be learned from FIG. 7 that, the device B 220 is above the device A 210, and a distance d1 from a microphone a to the speaker e of the device B 220 and a distance d2 from a microphone b to the speaker e are less than a distance d3 from a microphone c to the speaker e and a distance d4 from a microphone d to the speaker e. It may be understood that, when the device B 220 is below the device A210 (not shown in FIG. 7), the distance d1 from the microphone a to the speaker e and the distance d2 from the microphone b to the speaker e are greater than the distance d3 from the microphone c to the speaker e and the distance d4 from the microphone d to the speaker e. In addition, when a distance between the device A 210 and the device B 220 is longer, a difference between d1 and d2 is smaller, and a difference between d3 and d4 is smaller. When a position of the speaker e is closer to a symmetry axis parallel to a shorter edge of the device A 210, a difference between d1 and d2 is smaller, and a difference between d3 and d4 is smaller.

Because propagation media between the speaker e and the microphone a, the microphone b, the microphone c, and the microphone d are the same, when the speaker e sends a sound signal, propagation speeds v of transmitting the sound signal to the microphone a, the microphone b, the microphone c, and the microphone d are also the same. Propagation duration of propagating the sound signal from the speaker e to the microphone a is T1=d1/v, propagation duration of propagating the sound signal from the speaker e to the microphone b is T2=d2/v, propagation duration of propagating the sound signal from the speaker e to the microphone c is T3=d3/v, and propagation duration of propagating the sound signal from the speaker e to the microphone d is T4=d4/v. Because v=d1/T1=d2/T2=d3/T3=d4/T4, a value relationship between T1, T2, T3, and T4 is consistent with a value relationship between d1, d2, d3, and d4. In other words, distances from the microphone a, the microphone b, the microphone c, and the microphone d to the speaker e may be determined based on propagation duration of transmitting the sound signal from the speaker e to the microphone a, the microphone b, the microphone c, and the microphone d, to further determine that the device B 220 is above or below the device A 210.

Therefore, if it is necessary to detect that the device B 220 is above or below the device A 210, the device B 220 may send a sound signal A and a sound signal B through the speaker e. The device A 210 receives the sound signal A based on a microphone group A, and receives the sound signal B based on a microphone group B. The microphone group A may include at least one of the microphone a and the microphone b, and the microphone group B may include at least one of the microphone c and the microphone d. Propagation duration TA of propagating the sound signal A from the speaker e to the microphone group A is determined, propagation duration TB of propagating the sound signal B from the speaker e to the microphone group B is determined, and then it is determined, based on a difference between TA and TB, that the speaker e is closer to the microphone group A or closer to the microphone group B. If the speaker e is closer to the microphone group A, the device B 220 is closer to a position of the microphone group A in the device A 210. Then, in combination with that the microphone group A is on an upper side or a lower side of the device A 210, it can be determined that the device B 220 is above or below the device A 210. Similarly, if the speaker e is closer to the microphone group B, the device B 220 is closer to a position of the microphone group B in the device A 210. Then, in combination with that the microphone group B is on the upper side or the lower side of the device A 210, it can be determined that the device B 220 is above or below the device A 210. FIG. 7 is used as an example. Because the microphone group A is on the upper side of the device A 210, and the microphone group B is on the lower side of the device A 210, when the device B 220 is closer to the position of the microphone group A in the device A 210, the device B 220 is above the device A 210. Alternatively, it may be understood that, when the device B 220 is closer to the position of the microphone group B in the device A 210, the device B 220 is below the device A 210.

In some examples, if the microphone group A includes at least one of the microphone a and the microphone b, TA=T1 or TA=T2. Similarly, if the microphone group B includes at least one of the microphone c and the microphone d, TB=T3 or TB=T4.

In some examples, the microphone group A includes the microphone a and the microphone b, and the microphone group B includes the microphone c and the microphone d. In this case, TA may be positively correlated with T1 and T2, TB may be positively correlated with T3 and T4, and a positive correlation relationship between TA and T1 and T2 is the same as a positive correlation relationship between TB and T3 and T4. In some examples, TA=(T1+T2)/2, and TB=(T3+T4)/2.

It should be further noted that, although not shown in FIG. 7, it may be understood that the device A 210 may alternatively include a speaker and/or more microphones, and similarly, the device B 220 may alternatively include a microphone and/or more speakers.

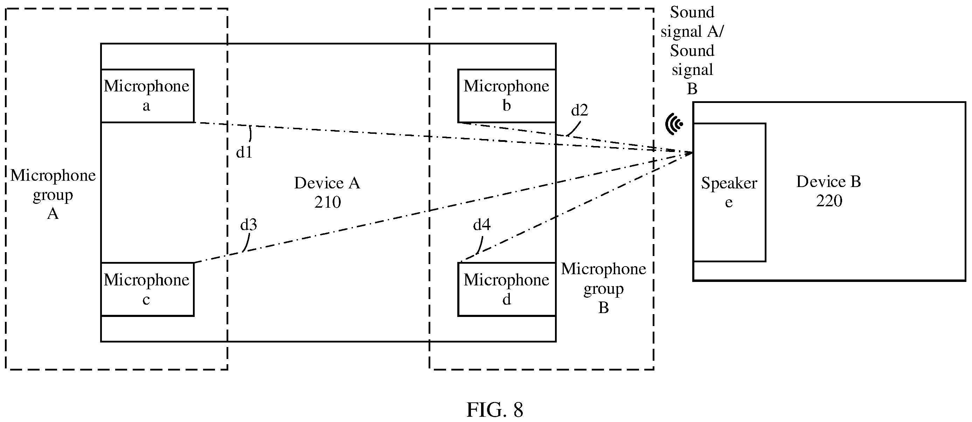

FIG. 8 is a diagram of an architecture of a system according to an embodiment of this application. A type of position relationship between a device A 210 and a device B 220 in FIG. 8 may be a left-right relationship.

It can be learned from FIG. 8 that, the device B 220 is on a right side of the device A 210, and a distance d1 from a microphone a to a speaker e of the device B 220 and a distance d3 from a microphone c to the speaker e are greater than a distance d2 from a microphone b to the speaker e and a distance d4 from a microphone d to the speaker e. In addition, it may be understood that, when the device B 220 is on a left side of the device A 210, the distance d1 from the microphone a to the speaker e and the distance d3 from the microphone c to the speaker e are less than the distance d2 from the microphone b to the speaker e and the distance d4 from the microphone d to the speaker e. In addition, when a distance between the device A 210 and the device B 220 is longer, a difference between d1 and d2 is smaller, and a difference between d3 and d4 is smaller. When a position of the speaker e is closer to a symmetry axis parallel to a shorter edge of the device A 210, a difference between d1 and d2 is smaller, and a difference between d3 and d4 is smaller.

Therefore, if it is necessary to detect that the device B 220 is on the left side or the right side of the device A 210, the device B 220 sends a sound signal A and a sound signal B through the speaker e. The device A 210 receives the sound signal A based on a microphone group A, and receives the sound signal B based on a microphone group B. The microphone group A may include at least one of the microphone a and the microphone c, and the microphone group B may include at least one of the microphone b and the microphone d. Propagation duration TA of propagating the sound signal A from the speaker e to the microphone group A is determined, propagation duration TB of propagating the sound signal B from the speaker e to the microphone group B is determined, and then it is determined, based on a difference between TA and TB, that the speaker e is closer to the microphone group A or closer to the microphone group B. If the speaker e is closer to the microphone group A, the device B 220 is closer to a position of the microphone group A in the device A 210. Then, in combination with that the microphone group A is on the left side or the right side of the device A 210, it can be determined that the device B 220 is on the left side or the right side of the device A 210. Similarly, if the speaker e is closer to the microphone group B, the device B 220 is closer to a position of the microphone group B in the device A 210. Then, in combination with that the microphone group B is on the left side or the right side of the device A 210, it can be determined that the device B 220 is on the left side or the right side of the device A 210. FIG. 8 is used as an example. Because the microphone group A is on the left side of the device A 210, and the microphone group B is on the right side of the device A 210, when the device B 220 is closer to the position of the microphone group B in the device A 210, the device B 220 is on the right side of the device A 210, or it may be understood that when the device B 220 is closer to the position of the microphone group A in the device A 210, the device B 220 is on the left side of the device A 210.

In some examples, if the microphone group A includes the microphone a or the microphone c, TA=T1 or TA=T3. Similarly, if the microphone group B includes the microphone b or the microphone d, TB=T2 or TB=T4.

In some examples, the microphone group A includes the microphone a and the microphone b, and the microphone group B includes the microphone c and the microphone d. In this case, TA may be positively correlated with T1 and T3, TB may be positively correlated with T2 and T4, and a positive correlation relationship between TA and T1 and T3 is the same as a positive correlation relationship between TB and T2 and T4. In some examples, TA=(T1+T2)/2, and TB=(T2+T4)/2.

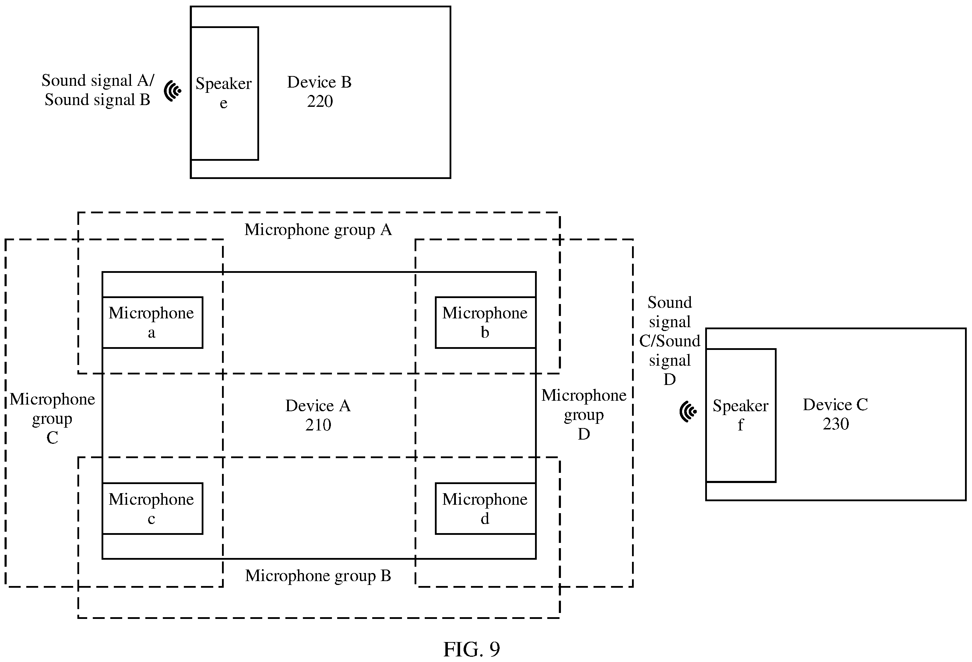

FIG. 9 is a diagram of an architecture of a system according to an embodiment of this application. The system shown in FIG. 9 may be understood as a combination of the systems shown in FIG. 7 and FIG. 8. The system in FIG. 9 further includes a device C 230. The device C 230 may be the foregoing terminal device 100. The device C 230 includes a speaker D. A type of position relationship between a device A 210 and a device B 220 may be an above-below relationship, and a type of position relationship between the device A 210 and the device C 230 may be a left-right relationship.

The device B 220 sends a sound signal A and a sound signal B through a speaker e. The device C 230 sends a sound signal C and a sound signal D through the speaker D.

The device A 210 receives the sound signal A and the sound signal B through a microphone group A and a microphone group B, determines propagation duration TA of propagating the sound signal A from the device B 220 to the device A 210 and propagation duration TB of propagating the sound signal B from the device B 220 to the device A 210, and determines, based on a value relationship between TA and TB, that the device B 220 is above or below the device A 210.

The device A 210 further receives the sound signal C and the sound signal D through a microphone group C and a microphone group D, determines propagation duration TC of propagating the sound signal C from the device C 230 to the device A210 and propagation duration TD of propagating the sound signal D from the device C 230 to the device A 210, and determines, based on a value relationship between TC and TD, whether the device C 230 is on a left side or a right side of the device A 210.

The microphone group A may include at least one of a microphone a and a microphone b, the microphone group B may include at least one of a microphone c and a microphone d, the microphone group C may include at least one of the microphone a and the microphone c, and the microphone group D may include at least one of the microphone b and the microphone d.

In other words, the device A 210 may include a plurality of pairs of microphone groups, each microphone group may include at least one microphone, and each pair of microphone groups are on two sides of a plane. The plane makes positions of the pair of microphone groups to conform to a type of position relationship, for example, the above-below relationship or the left-right relationship. Each pair of microphone groups may receive a group of sound signals, the group of sound signals includes two types of sound signals, each type of sound signal is received by microphones in different microphone groups, and the two types of sound signals have different sound emission moments and/or sound features. Therefore, a specific relative position between another device and the device A 210 may be determined based on the two sound signals. This improves efficiency of detecting the relative position between the devices.

With reference to the systems shown in FIG. 4 to FIG. 9, it can be learned that the step of determining the relative position between the device A210 and the device B 220 may be performed by a device receiving a sound signal. However, it may be understood that, in actual application, the device receiving the sound signal may alternatively send data required for determining the relative position between the device A 210 and the device B 220 to another device, and then the another device determines the relative position between the device A 210 and the device B 220 based on the received data.

For example, in the systems shown in FIG. 4 to FIG. 6, the device B 220 may send the arrival moment at which the sound signal A is received and the arrival moment at which the sound signal B is received to the device A 210. The device A 210 determines the propagation duration TA of the sound signal A and the propagation duration TB of the sound signal B based on the arrival moment of the sound signal A and the arrival moment of the sound signal B, and then determines the relative position between the device B 220 and the device A 210 based on the value relationship between TA and TB.

For another example, in the systems shown in FIG. 7 to FIG. 9, the device A 210 sends the arrival moment at which the sound signal A is received and the arrival moment at which the sound signal B is received to the device B 220. The device B 220 determines the propagation duration TA of the sound signal A and the propagation duration TB of the sound signal B based on the arrival moment of the sound signal A and the arrival moment of the sound signal B, and then determines the relative position between the device B 220 and the device A 210 based on the value relationship between TA and TB.

In some examples, the sound signal A, the sound signal B, the sound signal C, and the sound signal D may be ultrasonic waves or infrasonic waves, to reduce a possibility that the user hears the sound signal A, the sound signal B, the sound signal C, and the sound signal D, reduce or avoid disturbance to the user in a process of detecting the relative position between the devices, and improve user experience.

Based on the systems shown in FIG. 4 to FIG. 9, functions and roles of the device A 210 and the device B 220 in the process of determining the relative position between the device A 210 and the device B 220 are described. Next, refer to FIG. 10 and FIG. 11, where how to determine the propagation duration TA of the sound signal A is described.

As shown in FIG. 10, the device A 210 includes the speaker group A, and the speaker group A includes the speaker a, that is, the speaker group A includes only one speaker. The device A 210 sends the sound signal A through the speaker a at a sound emission moment 1, and the device B 220 receives the sound signal A through the microphone e at an arrival moment 1. In this case, the propagation duration TA of the sound signal A=T1=the arrival moment 1-the sound emission moment 1.

As shown in FIG. 11, the device A 210 includes the speaker group A, and the speaker group A includes the speaker a and the speaker c, that is, the speaker group A includes a plurality of speakers. The device A 210 sends the sound signal A through the speaker a and the speaker c at the sound emission moment 1, and the device B 220 receives the sound signal A twice at different moments.

In some examples, the device B 220 separately determines an arrival moment 1a and an arrival moment 1b at which the sound signal A is received twice, and determines the arrival moment 1 based on the arrival moment 1a and the arrival moment 1b. For example, the device B 220 may determine that the arrival moment 1=(the arrival moment 1a+the arrival moment 1b)/2, or the device B 220 may determine either of the arrival moment 1a and the arrival moment 1b as the arrival moment 1. When the arrival moment 1 is determined, it is then determined that TA=the arrival moment 1-the sound emission moment 1.

In some other examples, the device B 220 combines the sound signals A received twice to obtain a new sound signal A, determines the arrival moment 1 based on the new sound signal A, and then determines that TA=the arrival moment 1-the sound emission moment 1.

When receiving any sound signal, the device B 220 may determine, as an arrival moment of the sound signal, a moment at which an amplitude in the sound signal is the largest. Certainly, in actual application, the device B 220 may alternatively determine the arrival moment of the sound signal in another manner.

In some examples, the device A 210 may notify the device B 220 of the sound emission moment 1. In addition, a manner in which the device A 210 notifies the device B 220 of the sound emission moment 1 is not limited in embodiments of this application. In some examples, the device A 210 may send the sound emission moment 1 to the device B 220 through short-range communication such as Bluetooth and Wi-Fi. In some other embodiments, the device A 210 may modulate the sound signal A, to carry the sound emission moment 1 in the sound signal A, and send the sound signal A when the sound emission moment 1 arrives. The device B 220 demodulates the sound signal A, to obtain the sound emission moment 1.

In addition, a manner in which the device A 210 determines the propagation duration TA of the sound signal A in the systems shown in FIG. 7 to FIG. 9 is similar to or the same as a manner in which the device B 220 determines the propagation duration TA of the sound signal A in the systems shown in FIG. 4 to FIG. 6.

In some examples, the device B 220 includes the microphone group A, and the microphone group A includes the microphone a, that is, the microphone group A includes only one microphone. The device B 220 sends the sound signal A through the speaker e at a sound emission moment 1, and the device A 210 receives the sound signal A through the microphone a at an arrival moment 1. In this case, the propagation duration TA of the sound signal A=T1=the arrival moment 1-the sound emission moment 1.

In some examples, the device B 220 includes the microphone group A, and the microphone group A includes the microphone a and the microphone c, that is, the microphone group A includes a plurality of microphones. The device B 220 sends the sound signal A through the speaker e at the sound emission moment 1, and the device A 210 receives the sound signal A through the microphone a and the microphone b in sequence. In this case, the device A 210 may separately determine an arrival moment 1a and an arrival moment 1b at which the sound signal A is received twice, and determines the arrival moment 1 based on the arrival moment 1a and the arrival moment 1b. For example, the device A 210 may determine that the arrival moment 1=(the arrival moment 1a+the arrival moment 1b)/2, or the device A 210 may determine either of the arrival moment 1a and the arrival moment 1b as the arrival moment 1. When the arrival moment 1 is determined, it is then determined that TA=the arrival moment 1-the sound emission moment 1. Alternatively, the device A 210 combines the sound signals A received twice to obtain a new sound signal A, determines the arrival moment 1 based on the new sound signal A, and then determines that TA=the arrival moment 1-the sound emission moment 1.

It should be noted that a manner in which the device A 210 or the device B 220 determines the propagation duration TB of the sound signal B may be the same as or similar to the manner in which the TA is determined.

Specific embodiments are used below to describe in detail the technical solutions of this application. The following several specific embodiments may be combined with each other, and a same or similar concept or process may not be described repeatedly in some embodiments.

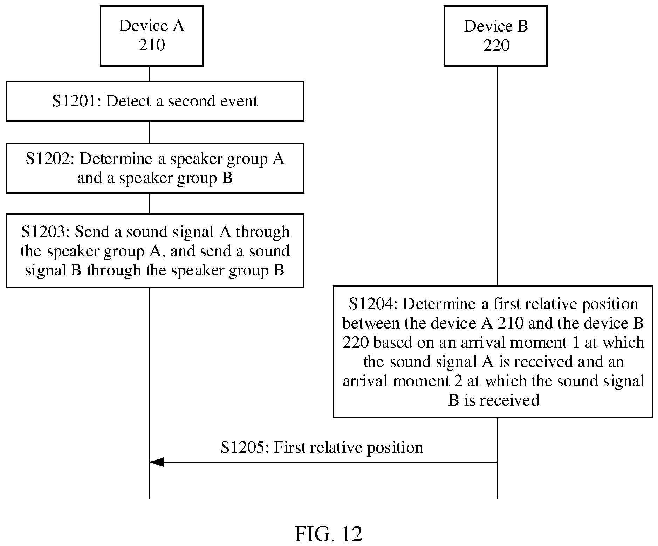

FIG. 12 is a flowchart of a method for detecting a relative position between devices according to an embodiment of this application. The method may be applied to the system shown in any one of FIG. 4 to FIG. 6. It should be noted that the method is not limited to a specific sequence described in FIG. 12 and below. It should be understood that in another embodiment, a sequence of some steps in the method may be exchanged based on an actual requirement, or some steps in the method may be omitted or deleted. The method includes the following steps.

S1201: The device A 210 detects a second event.

The second event is used to trigger detection of a relative position relationship between the device A 20 and the device B 220. In addition, it should be noted that the second event may be a preset event.

In some examples, the second event may include that the device A 210 establishes a communication connection to the device B 220. When the communication connection is established between the device A 210 and the device B 220, the relative position relationship between the device A 210 and the device B 220 may affect running of the device A 210 and/or the device B 220. Therefore, the device A 210 may detect the relative position relationship between the device A 210 and the device B 220.

In some examples, the second event may include that the device A 210 discovers the device B 220. In some examples, when receiving a specific signal sent by the device B 220, the device A 210 may determine that the device B 220 is discovered. For example, when receiving a beacon frame sent by the device B 220, the device A210 may determine that the device B 220 is discovered. The beacon frame may indicate information such as a hotspot name of the device B 220. In some examples, when the device B 220 changes from an offline state to an online state, the device A 210 may determine that the device B 220 is discovered. Certainly, in actual application, the device A 210 may alternatively discover the device B 220 in another manner. A manner in which the device A 210 discovers the device B 220 is not limited in embodiments of this application.

In some examples, the second event may include that the device A 210 creates a first task, where the first task may be a task executed depending on the relative position relationship between the device A 210 and the device B 220. In some examples, the first task may be a task collaboratively processed by the device A 210 and the device B 220.

In some examples, the second event may include that the device A 210 receives a first request sent by the device B 220, where the first request may be used to trigger detection of the relative position relationship between the device A 210 and the device B 220.

In some examples, the second event may include that a posture of the device A 210 changes. The posture change may include that the device A 210 moves, shakes, rotates, or the like. When the posture of the device A 210 changes, a relative position between the device A 210 and the device B 220 may change. Therefore, when the posture of the device A 210 changes, the relative position relationship between the device A 210 and the device B 220 may be detected. In some examples, the second event may include an event in which an amplitude of the posture change of the device A210 is greater than a preset amplitude threshold. The amplitude threshold may indicate sensitivity of the operation of detecting the relative position between the device A 210 and the device B 220 by the device A 210 to the posture change of the device A 210. When the amplitude threshold is small, the device A 210 may detect the relative position relationship between the device A 210 and the device B 220 when detecting that the posture change of the device A is small, and a frequency of detecting the relative position relationship between the device A 210 and the device B 220 is small. When the amplitude threshold is large, the device A 210 may detect the relative position relationship between the device A 210 and the device B 220 when detecting that the posture change of the device A is large, that is, a frequency of detecting the relative position relationship between the device A 210 and the device B 220 is large. In some examples, the second event may be that an angle of rotation of the device A 210 is greater than or equal to 90 degrees. It should be noted that a manner of the posture change of the device A 210 and a value of the amplitude threshold are not limited in embodiments of this application.

In some examples, a first event may include that a posture of the device B 220 changes. When the posture of the device B 220 changes, the relative position between the device A 210 and the device B 220 may also change. Therefore, when detecting that the posture of the device B 220 changes, the device A 210 may detect the relative position relationship between the device A 210 and the device B 220. In some examples, the first event may be an event in which an amplitude of the posture change of the device B 220 is greater than the preset amplitude threshold.

In some examples, the first event may include that a display mode of the device A 210 changes. In some examples, the display mode may include landscape display and portrait display, and a change of the display mode may include: changing from the landscape display to the portrait display, or changing from the portrait display to the landscape display. In some examples, the display mode may include primary-screen display and secondary-screen display, and a change of the display mode may include: changing from the primary-screen display to the secondary-screen display, or changing from the secondary-screen display to the primary-screen display. In some examples, the display mode may include split-screen display and full-screen display, and a change of the display mode may include: changing from the split-screen display to the full-screen display, or changing from the full-screen display to the split-screen display.

It should be noted that the device A 210 may alternatively perform at least some of the following steps in another case, to detect the relative position between the device A 210 and the device B 220. Therefore, S1201 is an optional step.

S 1202: The device A 210 determines a speaker group A and a speaker group B.

The speaker group A and the speaker group B each may include at least one speaker, and a quantity of speakers included in the speaker group A and the speaker group B may be less than or equal to a total quantity of speakers included in the device A 210. The speaker group A and the speaker group B may be respectively on two sides of a plane, a relative position between the speaker group A and the speaker group B is a third relative position, and a type of position relationship that matches the third relative position is a first type of position relationship.

The first type of position relationship may be any one of a plurality of types of position relationships into which at least three speakers included in the device A 210 may be classified. In some examples, the plurality of types of position relationships may include at least one of an above-below relationship and a left-right relationship. Certainly, the plurality of types of position relationships may further include more other types of position relationships, for example, may include at least one of an upper-left-lower-right relationship and a lower-left-upper-right relationship.

The third relative position may be a relative position that matches the first type of position relationship. In some examples, the first type of position relationship includes two relative positions, and the third relative position may be either of the two relative positions. For example, in FIG. 4, the third relative position between the speaker group A and the speaker group B may be that the speaker group A is above the speaker group B, and the first type of position relationship that matches the third relative position relationship may be the above-below relationship. In FIG. 5, the third relative position between the speaker group A and the speaker group B may be that the speaker group A is on the left side of the speaker group B, and the first type of position relationship that matches the third relative position relationship may be the left-right relationship.

In some examples, the device A 210 may first determine the speaker group A and the speaker group B, the relative position between the determined speaker group A and the determined speaker group B is the third relative position, and the type of position relationship that matches the third relative position is the first type of position relationship. Alternatively, in some other examples, the device A 210 may first determine the first type of position relationship, and then determine the speaker group A and the speaker group B based on the first type of position relationship, where the relative position between the speaker group A and the speaker group B is the third relative position.

In some examples, the device A 210 stores a plurality of pairs of speaker groups, each pair of speaker groups includes two speaker groups that are respectively on two sides of a plane, and the device A 210 may determine the speaker group A and the speaker group B from the plurality of pairs of speaker groups.

In some examples, the device A 210 groups all or some of the at least three speakers included in the device A 210, to determine the speaker group A and the speaker group B.

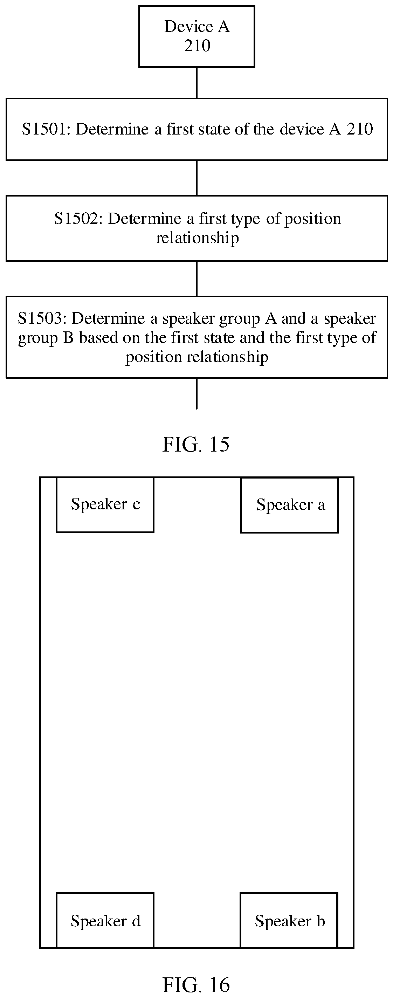

It should be noted that, for a manner in which the device A 210 determines the speaker group A and the speaker group B, reference may also be made to the method shown in FIG. 15.

It should be further noted that S1202 is an optional step.

S1203: The device A 210 send a sound signal A through the speaker group A, and sends a sound signal B through the speaker group B.

In some examples, a sound emission moment 1 at which the device A 210 sends the sound signal A may be the same as a sound emission moment 2 at which the device A 210 sends the sound signal B. In this case, to help the device B 220 distinguish between the sound signal A and the sound signal B, a sound feature of the sound signal A may be different from a sound feature of the sound signal B. In some examples, a frequency of the sound signal A may be different from a frequency of the sound signal B.

In some examples, the sound emission moment 1 at which the device A 210 sends the sound signal A may be different from the sound emission moment 2 at which the device A 210 sends the sound signal B. Because the sound emission moment 1 is different from the sound emission moment 2, the device B 220 may distinguish between the sound signal A and the sound signal B based on the sound emission moment 1 and the sound emission moment 2. Therefore, the frequency of the sound signal A may be the same as or different from the frequency of the sound signal B.

In some examples, to help the device B 220 more accurately receive the sound signal A and the sound signal B and improve accuracy of subsequently detecting the relative position between the device A 210 and the device B 220, the device A 210 may further send first configuration information to the device B 210. The first configuration information may indicate a manner of sending the sound signal A and the sound signal B; and/or the first configuration information may indicate the sound feature of the sound signal A and the sound feature of the sound signal B; and/or the first configuration information may indicate the sound emission moment 1 at which the sound signal A is sent and the sound emission moment 2 at which the sound signal B is sent. Certainly, in actual application, the first configuration information may further indicate more or less information related to detecting the relative position between the devices. For example, the first configuration information may indicate the first type of position relationship and/or the third relative position between the speaker group A and the speaker group B. In some examples, the device A 210 may carry the first configuration information in the sound signal A and/or the sound signal B through modulation.

It should be noted that at least some information included in the first configuration information may be sent by the device A 210 to the device B 220 in advance, or the device B 220 obtains the at least some information in another manner. Therefore, the device A 210 may not need to send the at least some information to the device B 220 each time the sound signal A and the sound signal B are sent. For example, the device A 210 may send, in advance, information such as the sound feature of the sound signal A, the sound feature of the sound signal B, and the manner of sending the sound signal A and the sound signal B to the device B 220. Alternatively, a related person skilled in the art presets, in the device B 220 before the device B 220 is delivered from a factory, the sound feature of the sound signal A, the sound feature of the sound signal B, and the manner of sending the sound signal A and the sound signal B.

S1204: The device B 220 determines a first relative position between the device A 210 and the device B 220 based on an arrival moment 1 at which the sound signal A is received and an arrival moment 2 at which the sound signal B is received.

Because the device A210 sends the sound signal A and the sound signal B through the speaker group A and the speaker group B that are in the third relative position, the device B 220 may determine, based on the arrival moment 1 at which the sound signal A is received and the arrival moment 2 at which the sound signal B is received, a value between propagation duration TA of the sound signal A and propagation duration TB of the sound signal B, to determine a distance from the device B 220 to the speaker group A and a distance from the device B 220 to the speaker group B. Then, the first relative position between the device A 210 and the device B 220 is accurately determined based on the third relative position between the speaker group A and the speaker group B and the first type of position relationship. The first relative position matches the first type of position relationship.

In some examples, the device B 220 may receive the sound signal A and the sound signal B through a same microphone (for example, a microphone e), and the arrival moment 1 and the arrival moment 2 are respectively arrival moments at which the sound signal A and the sound signal B are received by the microphone.

In some examples, the device B 220 may identify the sound signal A and the sound signal B according to an autocorrelation algorithm. In some examples, the device B 220 may obtain the sound feature of the sound signal A and the sound feature of the sound signal B that are sent by the device A 210. When a similarity between a sound feature of a received sound signal and the sound feature of the sound signal A is greater than a preset similarity threshold, the device B 220 determines that the sound signal A is received, and when a similarity between a sound feature of a received sound signal and the sound feature of the sound signal B is greater than the preset similarity threshold, the device B 220 determines that the sound signal B is received.

In some examples, the device B 220 may determine a moment corresponding to a maximum amplitude of the sound signal A as the arrival moment 1, and determine a moment corresponding to a maximum amplitude of the sound signal B as the arrival moment 2. Certainly, in actual application, the device B 220 may alternatively determine the arrival moment 1 and the arrival moment 2 in another manner, provided that a manner of determining the arrival moment 1 is the same as a manner of determining the arrival moment 2.

In some examples, the device B 220 may receive the first configuration information sent by the device A 210. In some examples, the device B 220 may demodulate the sound signal A and/or the sound signal B, to obtain the first configuration information carried in the sound signal A or the sound signal B.

In some examples, if the device A 210 simultaneously sends the sound signal A and the sound signal B, and the device B 220 receives the sound signal A and the sound signal B through a same microphone, the device B 220 may compare the arrival moment 1 and the arrival moment 2. If the arrival moment 1 is earlier than the arrival moment 2, that is, TA is less than TB, the device B 220 may determine that the device B 220 is closer to the speaker group A than the device B 220 to the speaker group B. If the arrival moment 1 is later than the arrival moment 2, that is, TA is greater than TB, the device B 220 may determine that the device B 220 is closer to the speaker group B than the device B 220 to the speaker group A. In some examples, if the device A 210 sends the sound signal A and the sound signal B at different moments, and the device B 220 receives the sound signal A and the sound signal B through a same microphone, the device B 220 may compare the propagation duration TA of the sound signal A and the propagation duration TB of the sound signal B, where TA=the arrival moment 1-the sound emission moment 1, and TB=the arrival moment 2-the sound emission moment 2. If TA is less than TB, the device B 220 may determine that the device B 220 is closer to the speaker group A than the device B 220 to the speaker group B. If TA is greater than TB, the device B 220 may determine that the device B 220 is closer to the speaker group B than the device B 220 to the speaker group A.

Further, in combination with the third relative position between the speaker group A and the speaker group B and the first type of position relationship, when the device B 220 determines that the device B 220 is closer to the speaker group A or closer to the speaker group B, the first relative position that is between the device B 220 and the device A 210 and that matches the first type of position relationship is determined. For example, as shown in FIG. 4, the first type of position relationship is the above-below relationship, and the speaker group A is above the speaker group B. In this case, the device B 220 is closer to the speaker group A than the device B 220 to the speaker group B, that is, the device B 220 is above the device A 210. Alternatively, it may be understood that the device B 220 is closer to the speaker group B than the device B 220 to the speaker group A, that is, the device B 220 is below the device A 210. For another example, as shown in FIG. 5, the first type of position relationship is the left-right relationship, and the speaker group A is on the left side of the speaker group B. In this case, the device B 220 is closer to the speaker group B than the device B 220 to the speaker group A, that is, the device B 220 is on the right side of the device A 210. Alternatively, it may be understood that the device B 220 is closer to the speaker group A than the device B 220 to the speaker group B, that is, the device B 220 is on the left side of the device A 210.

In some examples, the device B 220 may receive the sound signal A and the sound signal B through a plurality of microphones. In some examples, a distance between the plurality of microphones may be ignored. For example, the plurality of microphones are different microphone units in a same microphone array, and duration for transmitting a same sound signal to the plurality of microphones is almost the same. Therefore, processing may still be performed based on the case in which the sound signal A and the sound signal B are received through a same microphone. In some other examples, a distance between the plurality of microphones is large, and duration required for transmitting a same sound signal to different microphones is different. In this case, the device B 220 may separately receive the sound signal A and the sound signal B through the plurality of microphones, and obtain a plurality of first relative positions. When the plurality of first relative positions are the same, it is determined that the first relative positions are valid. When the plurality of first relative positions are different, it is determined that the plurality of first relative positions are invalid and a new first relative position is determined. In other words, the sound signal A and the sound signal B are received through the plurality of microphones, and the first relative position is determined through comparison, to ensure reliability of the first relative position. Alternatively, in some other examples, a distance between the plurality of microphones is large, and duration required for transmitting a same sound signal to different microphones is different. In this case, the device B 220 may receive the sound signal A and the sound signal B through two of the microphones respectively, and correct the arrival moment 1 and/or the arrival moment 2 based on a distance between the two microphones, to obtain a new arrival moment 1 and a new arrival moment 2. In this way, impact of positions of the two microphones on receiving the sound signal A and/or the sound signal B is reduced or avoided. Then, the relative position between the device B 220 and the device A 210 may be determined based on the new arrival moment 1 and the new arrival moment 2.

It should be noted that, in actual application, the first relative position between the device A 210 and the device B 220 may be determined based on the arrival moment 1 of the sound signal A and the arrival moment 2 of the sound signal B with reference to time of arrival (time of arrival, TOA).

S1205: The device B 220 sends the first relative position to the device A 210.

S1204 is an optional step.

In this embodiment of this application, the device A 210 may determine the speaker group A and the speaker group B in response to detecting the second event, where the third relative position between the speaker group A and the speaker group B matches the first type of position relationship. When the device A 210 sends the sound signal A through the speaker group A, and sends the sound signal B through the speaker group B, the device B 220 may determine, based on the arrival moment 1 at which the sound signal A is received and the arrival moment 2 at which the sound signal B is received, the first relative position that is between the device A 210 and the device B 220 and that matches the first type of position relationship. In other words, the relative position between the devices is accurately detected through the speaker and the microphone without relying on a component like a radar. This reduces costs of detecting the relative position between the devices.

In some examples, when performing S1203 to play the sound signal A and the sound signal B, the device A 210 may continuously play the sound signal A and the sound signal B until the second event is detected next time. In some examples, the device A210 may stop playing the sound signal A and the sound signal B after third preset duration since performing S1203 to start to play the sound signal A and the sound signal B. Certainly, in actual application, the device A 210 may alternatively determine, in another manner, an occasion for stopping playing the sound signal A and the sound signal B. For example, the device A 210 may stop playing the sound signal A and the sound signal B when receiving the first relative position between the device A 210 and the device B 220 that is sent by the device B 220.

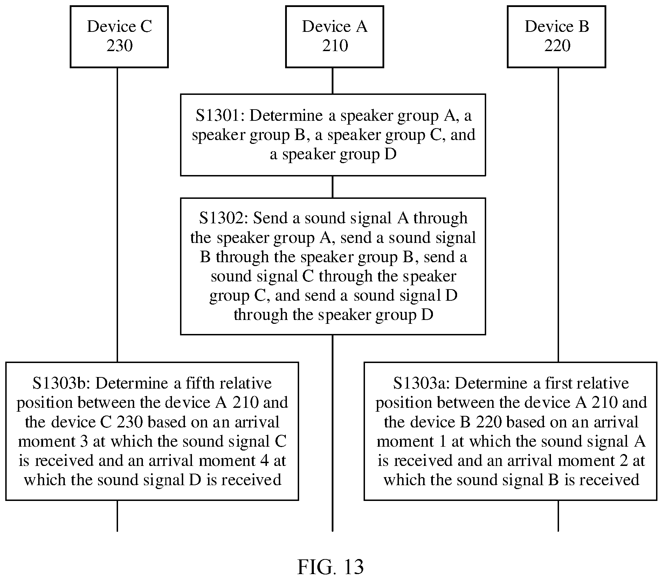

FIG. 13 is a flowchart of a method for detecting a relative position between devices according to an embodiment of this application. The method may be applied to the system shown in any one of FIG. 4 to FIG. 6. The device A 210 may send a plurality of groups of sound signals through a plurality of pairs of speaker groups, so that relative positions between the device A 210 and devices in a plurality of different positions such as the device B 220 and the device C 230 can be determined. It should be noted that the method is not limited to a specific sequence described in FIG. 13 and below. It should be understood that in another embodiment, a sequence of some steps in the method may be exchanged based on an actual requirement, or some steps in the method may be omitted or deleted. The method includes the following steps.

S1301: The device A 210 determines a speaker group A, a speaker group B, a speaker group C, and a speaker group D.

The speaker group C and the speaker group D each may include at least one speaker, and a quantity of speakers included in the speaker group C and the speaker group D may be less than or equal to a total quantity of speakers included in the device A 210. The speaker group C and the speaker group D may be respectively on two sides of a plane, a relative position between the speaker group C and the speaker group D is a fourth relative position, and a type of position relationship that matches the fourth relative position is a second type of position relationship.

It should be noted that a third relative position is different from the fourth relative position, and the second type of position relationship is different from a first type of position relationship. For example, in the system shown in FIG. 6, the first type of position relationship between the speaker group A and the speaker group B is an above-below relationship, the third relative position is that the speaker group A is above the speaker group B, the second type of position relationship between the speaker group C and the speaker group D is a left-right relationship, and the fourth relative position is that the speaker group C is on the left side of the speaker group D.

It should be noted that the speaker group A and the speaker group C or the speaker group D may include at most some same speakers, and the speaker group B and the speaker group C or the speaker group D may include at most some same speakers. For example, in the system shown in FIG. 6, both the speaker group A and the speaker group C include a speaker a, both the speaker group A and the speaker group D include a speaker b, both the speaker group B and the speaker group C include a speaker c, and both the speaker group B and the speaker group D include a speaker d.

It should be noted that, a manner in which the device A 210 determines the speaker group A and the speaker group B in S1301 may be the same as the manner of determining the speaker group A and the speaker group B in S1202, and a manner in which the device A 210 determines the speaker group C and the speaker group D in S1301 may be similar to or the same as the manner of determining the speaker group A and the speaker group B in S1202. Details are not described herein again.

S1302: The device A 210 sends a sound signal A through the speaker group A, sends a sound signal B through the speaker group B, sends a sound signal C through the speaker group C, and sends a sound signal D through the speaker group D.

In some examples, any two of a sound feature of the sound signal A, a sound feature of the sound signal B, a sound feature of the sound signal C, and a sound feature of the sound signal D are different, to help the device B 220 accurately identify the sound signal A and the sound signal B, and help the device C 230 accurately identify the sound signal C and the sound signal D, so as to improve accuracy and efficiency of detecting relative positions between a plurality of devices.

In some examples, the device A 210 may simultaneously send the sound signal A through the speaker group A, send the sound signal B through the speaker group B, send the sound signal C through the speaker group C, and send the sound signal D through the speaker group D.

In some examples, the device A 210 may first send the sound signal A through the speaker group A, and send the sound signal B through the speaker group B; after first preset duration, send the sound signal C through the speaker group C, and send the sound signal D through the speaker group D; and after the first preset duration again, send the sound signal A through the speaker group A, and send the sound signal B through the speaker group B; ...; and the rest may be deduced by analogy. In this way, the sound signal A, the sound signal B, the sound signal C, and the sound signal D are cyclically sent. In addition, it should be noted that a manner of determining the first preset duration and a duration value of the first preset duration are not limited in embodiments of this application.

S1303a: The device B 220 determines a first relative position between the device A 210 and the device B 220 based on an arrival moment 1 at which the sound signal A is received and an arrival moment 2 at which the sound signal B is received.

It should be noted that a manner in which the device B 220 performs S1303a to determine the first relative position between the device A 210 and the device B 220 based on the arrival moment 1 at which the sound signal A is received and the arrival moment 2 at which the sound signal B is received may be the same as the manner in which the device B 220 performs S1203 to determine the first relative position between the device A 210 and the device B 220 based on the arrival moment 1 at which the sound signal A is received and the arrival moment 2 at which the sound signal B is received. Details are not described herein again.

In some examples, the device A 210 sends first configuration information to the device B 220. The first configuration information may indicate the sound feature of the sound signal A and the sound feature of the sound signal B. In this case, the device B 220 may identify the sound signal A based on the sound feature of the sound signal A, identify the sound signal B based on the sound feature of the sound signal B, and ignore the sound signal C and the sound signal D. Certainly, in actual application, the first configuration information may alternatively indicate other information. For example, the first configuration information may indicate a manner of sending the sound signal A and the sound signal B; and/or the first configuration information may indicate a sound emission moment 1 at which the sound signal A is sent and a sound emission moment 2 at which the sound signal B is sent.

S1303b: The device C 230 determines a fifth relative position between the device A 210 and the device C 230 based on an arrival moment 3 at which the sound signal C is received and an arrival moment 4 at which the sound signal D is received.

The fifth relative position matches the second type of position relationship.

It should be noted that a manner in which the device C 230 performs S1303b to determine the fifth relative position between the device A 210 and the device C 230 based on the arrival moment 3 at which the sound signal C is received and the arrival moment 4 at which the sound signal D is received may be the same as or similar to the manner in which the device B 220 performs S1303a to determine the first relative position between the device A 210 and the device B 220 based on the arrival moment 1 at which the sound signal A is received and the arrival moment 2 at which the sound signal B is received. Details are not described herein again.

In some examples, the device A 210 sends second configuration information to the device C 230. The second configuration information may indicate the sound feature of the sound signal C and the sound feature of the sound signal D. In this case, the device C 230 may identify the sound signal C based on the sound feature of the sound signal C, identify the sound signal D based on the sound feature of the sound signal D, and ignore the sound signal A and the sound signal B. Certainly, in actual application, the second configuration information may alternatively indicate other information. For example, the second configuration information may indicate a manner of sending the sound signal C and the sound signal D; and/or the first configuration information may indicate a sound emission moment 3 at which the sound signal C is sent and a sound emission moment 4 at which the sound signal D is sent.

It should be noted that the device A 210 may send at least some information in the second configuration information to the device C 230 in advance, or the device C 230 may obtain the at least some information in another manner. Therefore, the device A 210 may not need to send the at least some information to the device C 230 each time the sound signal C and the sound signal D are sent.

In some examples, the device A 210 may send fourth configuration information to the device B 220 and the device C 230, where the fourth configuration information indicates a manner of sending the sound signal A, the sound signal B, the sound signal C, and the sound signal D; and/or the fourth configuration information may indicate the sound feature of the sound signal A, the sound feature of the sound signal B, the sound feature of the sound signal C, and the sound feature of the sound signal D; and/or the fourth configuration information may indicate the sound emission moment 1 at which the sound signal A is sent, the sound emission moment 2 at which the sound signal B is sent, the sound emission moment 3 at which the sound signal C is sent, and the sound emission moment 4 at which the sound signal D is sent. The device B 220 may receive the sound signal C and the sound signal D, to determine a second relative position between the device B 220 and the device A 210, where the second relative position matches the second type of position relationship. The device C 230 may receive the sound signal C and the sound signal D, to determine the fifth relative position between the device C 230 and the device A 210, where the fifth relative position matches the second type of position relationship.

It should be noted that the device A 210 may send at least some information in the fourth configuration information to the device B 220 and the device C 230 in advance, or the device B 220 and the device C 230 may obtain the at least some information in another manner. Therefore, the device A 210 may not need to send the at least some information to the device B 220 and the device C 230 each time when the sound signal A, the sound signal B, the sound signal C, and the sound signal D are sent.

In this embodiment of this application, the device A 210 may send a plurality of groups of sound signals through a plurality of groups of speakers, and relative positions between different groups of speakers correspond to different types of position relationships, so that a plurality of devices that are in a plurality of types of position relationships with the device A 210 each can determine a relative position between the device and the device A 210. This greatly improves efficiency of detecting the relative positions between the devices.

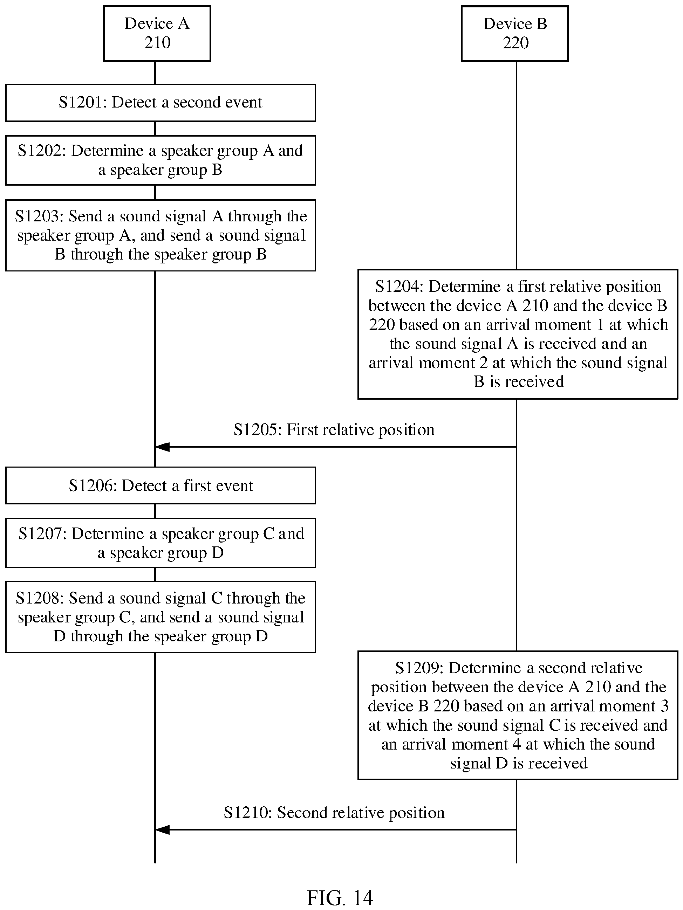

FIG. 14 is a flowchart of a method for detecting a relative position between devices according to an embodiment of this application. The method may be applied to the device A 210 in the system shown in any one of FIG. 4 to FIG. 6. The device A 210 may continue to perform the method shown in FIG. 14 after the method shown in FIG. 12, to change a sound signal sending manner, so as to update the relative position between the device A 210 and the device B 220. It should be noted that the method is not limited to a specific sequence described in FIG. 14 and below. It should be understood that in another embodiment, a sequence of some steps in the method may be exchanged based on an actual requirement, or some steps in the method may be omitted or deleted. The method includes the following steps.

S1206: The device A 210 detects a first event.

The first event may be used to trigger the device A 210 to switch a sound emission mode. In addition, it should be noted that the first event may be a preset event.

In some examples, the first event may include that a posture of the device A 210 changes.

In some examples, the first event may include that a posture of the device B 210 changes.

In some examples, the first event may include that a display mode of the device A 210 changes.

In some examples, the first event may include that the device A 210 receives a second request sent by the device B 220, where the second request is used to request the device A 210 to switch a sound emission mode.

It should be noted that S1206 is an optional step. For example, in some examples, the device A 210 may continue to perform at least some of the following steps after second preset duration since performing S1203. It should be further noted that a manner of determining the second preset duration and a duration value of the second preset duration are not limited in embodiments of this application.

S1207: The device A 210 determines a speaker group C and a speaker group D.

The speaker group C and the speaker group D each may include at least one speaker, and a quantity of speakers included in the speaker group C and the speaker group D may be less than or equal to a total quantity of speakers included in the device A 210. The speaker group C and the speaker group D may be respectively on two sides of a plane, a relative position between the speaker group C and the speaker group D is a fourth relative position, and a type of position relationship that matches the fourth relative position is a second type of position relationship.

It should be noted that a third relative position is different from the fourth relative position, and the second type of position relationship is different from a first type of position relationship.

It should be further noted that a manner in which the device A 210 performs S1207 to determine the speaker group C and the speaker group D may be similar to or the same as the manner of determining the speaker group A and the speaker group B in S1202. Details are not described herein again.

It should be further noted that S1207 is an optional step.

S1208: The device A 210 sends a sound signal C through the speaker group C, and sends a sound signal D through the speaker group D.

It should be noted that a manner in which the device A 210 sends the sound signal C through the speaker group C and sends the sound signal D through the speaker group D in S1208 may also be the same as or similar to the manner in which the device A 210 sends the sound signal A through the speaker group A and sends the sound signal B through the speaker group B in S1203. Details are not described herein again.

S1209: The device B 220 determines a second relative position between the device A 210 and the device B 220 based on an arrival moment 3 at which the sound signal C is received and an arrival moment 4 at which the sound signal D is received.

The second relative position may match the second type of position relationship.

It should be noted that a manner in which the device B 220 performs S1209 to determine the second relative position between the device A 210 and the device B 220 based on the arrival moment 3 at which the sound signal C is received and the arrival moment 4 at which the sound signal D is received may be the same as or similar to the manner in which the device C 230 determines the fifth relative position between the device A 210 and the device C 230 based on the arrival moment 3 at which the sound signal C is received and the arrival moment 4 at which the sound signal D is received in S1303b.

S1210: The device B 220 sends the second relative position to the device A 210.

It should be noted that S1210 is an optional step.

In this embodiment of this application, the device A 210 may switch the sound signal sending manner in response to detecting the first event, so that the device B 220 and the device A 210 can update the relative position between the device B 220 and the device A 210. This improves accuracy of detecting the relative position between the device B 220 and the device A 210.

For example, when detecting that a communication connection is established to the device B 220, the device A 210 plays a sound signal A through the speaker group A, and plays a sound signal B through the speaker group B, where the third relative position between the speaker group A and the speaker group B 220 is that the speaker group A is on the left side of the speaker group B 220, and the first type of position relationship that matches the third relative position is a left-right relationship. The device B 220 determines a first relative position between the device B 220 and the device A 210 based on the sound signal A and the sound signal B. However, in this case, the device B 220 may be above or below the device A 210, and the device B 220 may be difficult to determine the first relative position based on the sound signal A and the sound signal B. Therefore, the device B 220 sends the second request to the device A 210, where the second request indicates that the device B 220 fails to determine the relative position between the device B 220 and the device A 210, or the second request is used to request the device A210 to switch the sound emission mode. When receiving the second request, the device A 210 plays the sound signal C through the speaker group C, and plays the sound signal D through the speaker group D, where the fourth relative position between the speaker group C and the speaker group D is that the speaker group A is above the speaker group B 220. The device B 220 determines the second relative position based on the sound signal C and the sound signal D.

FIG. 15 is a flowchart of a speaker grouping method according to an embodiment of this application. The method may be applied to the device A 210 in the system shown in any one of FIG. 4 to FIG. 6. It should be noted that the method is not limited to a specific sequence described in FIG. 15 and below. It should be understood that in another embodiment, a sequence of some steps in the method may be exchanged based on an actual requirement, or some steps in the method may be omitted or deleted. The method includes the following steps.

S1501: The device A 210 determines a first state of the device A 210.

When the device A210 is in different states, a relative position between speakers of the device A 210 on the device A 210 may be accordingly different. For example, on the device A 210 in FIG. 4, the speaker a and the speaker c are on the left side of the device A 210, and the speaker b and the speaker d are on the right side of the device A 210. When the device A 210 rotates clockwise by 90 degrees, the speaker c and the speaker d are on the left side of the device A 210, and the speaker a and the speaker b are on the right side of the device A 210, as shown in FIG. 16. Therefore, to help the device A 210 determine a current relative position between the speakers on the device A 210, the device A 210 may determine the first state of the device A 210.

The first state may indicate a state of the device A 210. In some examples, the first state of the device A 210 may include a first posture of the device A 210 or a first display mode of the device A 210. The device A 210 may determine the first posture of the device A 210 through a sensor 150 in the device A 210.

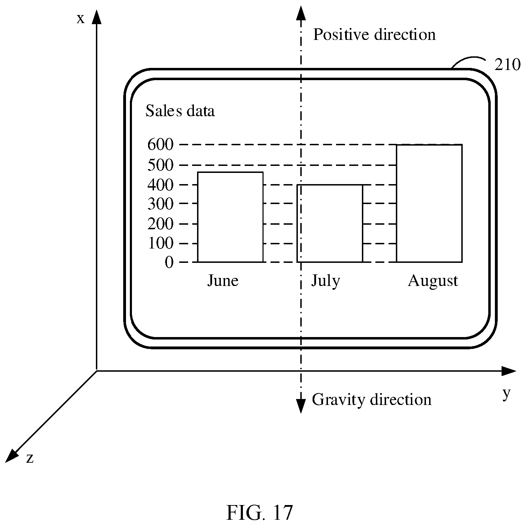

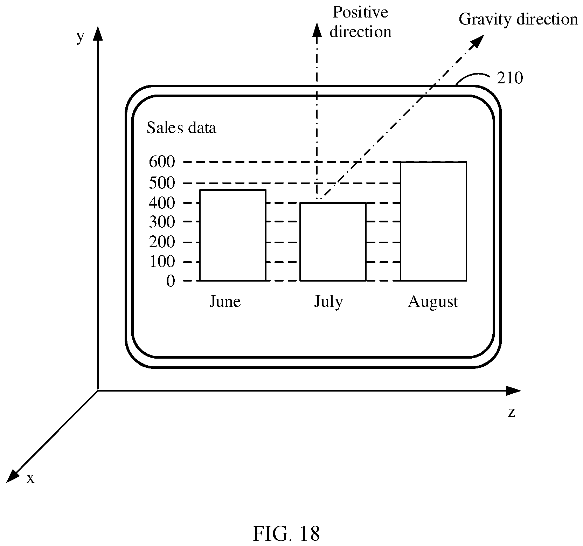

It should be noted that the first posture of the device A 210 may correspond to or may not correspond to the first display mode of the device A 210. In some examples, when a screen rotation switch of the device A 210 is turned on, and a plane on which a display of the device A 210 is located is perpendicular to or nearly perpendicular to a horizontal plane (that is, the device A 210 is vertically placed), the first display mode of the device A210 may correspond to the first posture of the device A 210. When the device A 210 is in the first display mode, a positive direction of content displayed on the display of the device A 210 is parallel to or nearly parallel to a gravity direction of the device A 210. As shown in FIG. 17, a plane on which a coordinate axis y and a coordinate axis z are located is the horizontal plane, and a direction of a coordinate axis x is parallel to and opposite to the gravity direction. When the plane on which the display is located is perpendicular to the horizontal plane, the positive direction of the content displayed on the display is opposite to the gravity direction. The device A210 may determine the corresponding first display mode based on the first posture. In some other examples, when the screen rotation switch of the device A 210 is turned off, or the plane on which the display of the device A 210 is located is parallel to or nearly parallel to the horizontal plane (that is, the device A210 is horizontally placed), the first display mode of the device A 210 may not correspond to the first posture of the device A 210, and the current first display mode of the device A 210 may be a preset display mode or a display mode specified by a user. For example, as shown in FIG. 18, the plane on which the coordinate axis y and the coordinate axis z are located is the horizontal plane, the direction of the coordinate axis x is parallel to and opposite to the gravity direction, and the plane on which the display of the device A 210 is located is parallel to the horizontal plane. In this case, the positive direction of the content displayed on the display of the device A 210 is perpendicular to the gravity direction of the device A 210.

S1502: The device A 210 determines a first type of position relationship.

The first type of position relationship may indicate a type of position relationship that matches the relative position between the device A 210 and the device B 220. When the device A 210 sends a sound signal through a pair of speaker groups that match the first type of position relationship, another device that is in the first type of position relationship with the device A210 may determine, based on the sound signal, a specific relative position that is between the another device and the device A 210 and that matches the first type of position relationship.

In some examples, the device A 210 may obtain the first type of position relationship sent by the device B 220. In some examples, the device A 210 may obtain the first type of position relationship from a first request or a second request sent by the device B 220.

In some examples, the device A 210 may determine the first type of position relationship based on a first task. In some examples, the device A 210 may determine the first type of position relationship based on an application corresponding to the first task. For example, when the first task is a task that needs to be processed when the device A 210 and the device B 220 are in a left-right relationship, the first type of position relationship may be the left-right relationship; or when the first task is a task that needs to be processed when the device A210 and the device B 220 are in an above-below relationship, the first type of position relationship may be the above-below relationship.

It should be noted that the device A 210 may first perform S1502 to determine the first type of position relationship, and then perform S1501 to determine the first state; or the device A 210 may simultaneously perform S1501 and S1502 to determine the first state and the first type of position relationship. A sequence in which the device A 210 determines the first type of position relationship and the first state is not limited in embodiments of this application.

S1503: The device A 210 determines a speaker group A and a speaker group B based on the first state and the first type of position relationship.

The device A 210 may accurately determine the speaker group A and the speaker group B based on the detected relative position that is between the device A 210 and the device B 220 and that is indicated by the first type of position relationship, a relative position between a pair of actually required speaker groups, and the relative position between the speakers on the device A 210 when the device A 210 is in the first state, where a third relative position between the speaker group A and the speaker group matches the first type of position relationship.

The device A 210 in FIG. 4 is still used as an example. If the device A 210 receives the first request sent by the device B 220, and the first type of position relationship carried in the first request is the above-below relationship, the device A 210 may determine that two speaker groups that are in the above-below relationship need to be obtained through division. If the device A 210 is in a landscape mode, it may be determined, based on the landscape mode, that the speaker a and the speaker b are currently located above, and the speaker c and the speaker d are currently located below. Therefore, it is determined that the speaker group A includes the speaker a and the speaker b, and the speaker group B includes the speaker c and the speaker d.

The device A 210 shown in FIG. 16 is still used as an example. It is assumed that the first type of position relationship is still the above-below relationship. If the device A 210 is in a portrait mode, it may be determined, based on the portrait mode, that the speaker a and the speaker c are currently located above, and the speaker b and the speaker d are currently located below. Therefore, it is determined that the speaker group A includes the speaker a and the speaker c, and the speaker group B includes the speaker b and the speaker d.

In some examples, the device A 210 may store a correspondence between a display mode and a type of position relationship and a speaker group, and the correspondence includes the speaker group A and the speaker group B that correspond to the first display mode and the first type of position relationship. In this case, when determining the first display mode and the first target type of position relationship, the device A 210 may determine the speaker group A and the speaker group B from the correspondence.

For example, the correspondence that is stored in the device A 210 and that is between a display mode and a type of position relationship and a speaker may be shown in Table 1.

**Table 1**

| Display mode | Type of position relationship | Speaker group A | Speaker group B |
|---|---|---|---|
| Landscape mode | Above-below relationship | Speaker a and speaker b | Speaker c and speaker d |
| Landscape mode | Left-right relationship | Speaker a and speaker c | Speaker b and speaker d |
| Portrait mode | Above-below relationship | Speaker a and speaker c | Speaker b and speaker d |
| Portrait mode | Left-right relationship | Speaker a and speaker b | Speaker c and speaker d |
| ... | ... | ... | ... |

It should be noted that in this embodiment of this application, Table 1 is merely used as an example to describe the correspondence between a display mode and a type of position relationship and a speaker group, and does not constitute a limitation on the correspondence between a display mode and a type of position relationship and a speaker group.

In some examples, the device A 210 may store a correspondence between a posture and a type of position relationship and a speaker group, and the correspondence includes the speaker group A and the speaker group B that correspond to the first posture and the first type of position relationship. In this case, when determining the first posture and the first type of position relationship, the device A 210 may determine the speaker group A and the speaker group B from the correspondence.

For example, the correspondence that is stored in the device A 210 and that is between a posture and a type of position relationship and a speaker may be shown in Table 2.

**Table 2**

| Posture | Type of position relationship | Speaker group A | Speaker group B |
|---|---|---|---|
| Horizontally placed | Above-below relationship | Speaker a and speaker b | Speaker c and speaker d |
| Horizontally placed | Left-right relationship | Speaker a and speaker c | Speaker b and speaker d |
| Vertically placed, where the gravity direction is perpendicular to a longer edge of a frame | Above-below relationship | Speaker a and speaker b | Speaker c and speaker d |
| Vertically placed, where the gravity direction is perpendicular to the longer edge of the frame | Left-right relationship | Speaker a and speaker c | Speaker b and speaker d |
| Vertically placed, where the gravity | Above-below | Speaker a | Speaker b |
| direction is perpendicular to a shorter edge of the frame | relationship | and speaker c | and speaker d |
| Vertically placed, where the gravity direction is perpendicular to the shorter edge of the frame | Left-right relationship | Speaker a and speaker b | Speaker c and speaker d |
| ... | ... | ... | ... |

It should be noted that in this embodiment of this application, Table 2 is merely used as an example to describe the correspondence between a posture and a type of position relationship and a speaker group, and does not constitute a limitation on the correspondence between a posture and a type of position relationship and a speaker group.

In some examples, the device A 210 may store first coordinates of the speakers on the device A 210. The first coordinates may be coordinates of the speakers on the device A 210 when the device A 210 is in a preset second posture. The first coordinates may be understood as absolute coordinates of the speakers on the device A 210. When determining the first posture, the device A 210 may convert the first coordinates corresponding to the second posture into second coordinates corresponding to the first posture, where the second coordinates may be understood as relative coordinates corresponding to the first posture. When determining the second coordinates of the speakers, the device A 210 may determine the speaker group A and the speaker group B based on the second coordinates of the speakers and the first type of position relationship.

The device A 210 shown in FIG. 4 is still used as an example. It is assumed that a posture of the device A 210 in FIG. 4 is the second posture. Before the device A 210 is delivered from a factory, a manufacturer of the device A 210 calibrates the second posture and the first coordinates of the speakers. First coordinates of the speaker a may be (-1, 1), first coordinates of the speaker b may be (1, 1), first coordinates of the speaker c may be (-1, -1), and first coordinates of the speaker d may be (1, -1). The device A 210 may determine, based on the first coordinates of the speakers, that the speaker a is on an upper left side, the speaker b is on an upper right side, the speaker c is on a lower left side, and the speaker d is on a lower right side. If the device A 210 rotates clockwise by 90 degrees and is in the first posture shown in FIG. 16, the device A 210 transforms the first coordinates of the speakers based on the first posture, to obtain that second coordinates of the speaker a may be (1, 1), second coordinates of the speaker b may be (1, -1), second coordinates of the speaker c may be (1, -1), and second coordinates of the speaker d may be (-1, -1). In this case, the device A 210 may determine, based on the second coordinates of the speakers, that the speaker a is on the upper right side, the speaker b is on the lower left side, the speaker c is on the upper left side, and the speaker d is on the lower left side.

In this embodiment of this application, the device A210 may accurately determine the speaker group A and the speaker group B based on the detected relative position that is between the device A210 and the device B 220 and that is indicated by the first type of position relationship, a relative position between a pair of actually required speaker groups, and the relative position between the speakers on the device A 210 when the device A 210 is in the first state. This improves accuracy of grouping the speakers, so that the relative position that is between the device A 210 and the device B 220 and that matches the first type of position relationship can be accurately determined based on sound signals sent by the pair of speaker groups. In other words, this improves accuracy of detecting the relative position between the device A 210 and the device B 220.

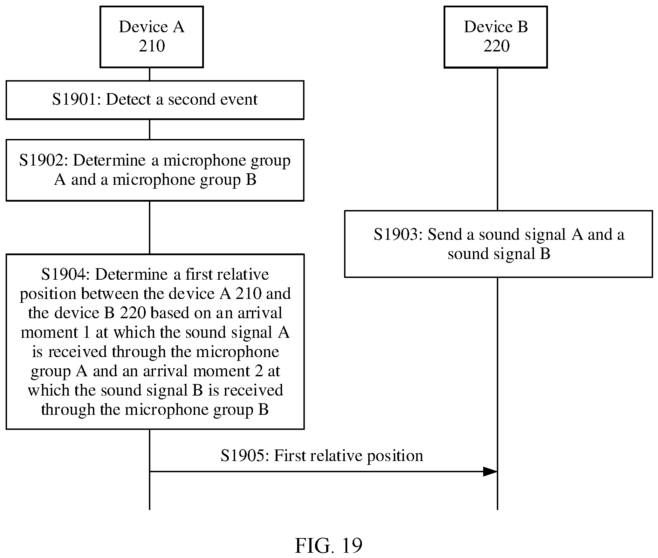

FIG. 19 is a flowchart of a method for detecting a relative position between devices according to an embodiment of this application. The method may be applied to the system shown in any one of FIG. 7 to FIG. 9. It should be noted that the method is not limited to a specific sequence described in FIG. 19 and below. It should be understood that in another embodiment, a sequence of some steps in the method may be exchanged based on an actual requirement, or some steps in the method may be omitted or deleted. The method includes the following steps.

S1901: The device A 210 detects a second event.

It should be noted that, for a manner in which the device A 210 performs S1901 and detects the second event, refer to related descriptions in S1201. Details are not described herein again.

It should be further noted that the device A 210 may alternatively perform at least some of the following steps in another case, to detect a relative position between the device A 210 and the device B 220. Therefore, S1901 is an optional step.

S1902: The device A 210 determines a microphone group A and a microphone group B.

The microphone group A and the microphone group B each may include at least one microphone, and a quantity of microphones included in the microphone group A and the microphone group B may be less than or equal to a total quantity of microphones included in the device A 210. The microphone group A and the microphone group B may be respectively on two sides of a plane, a relative position between the microphone group A and the microphone group B is a third relative position, and a type of position relationship that matches the third relative position is a first type of position relationship.

The first type of position relationship may be any one of at least one type of position relationship into which the at least three microphones included in the device A 210 may be classified.

For example, in FIG. 7, the third relative position between the microphone group A and the microphone group B may be that the microphone group A is above the microphone group B, and the first type of position relationship that matches the third relative position may be an above-below relationship. In FIG. 8, the first relative position between the microphone group A and the microphone group B may be that the microphone group A is on the left side of the microphone group B, and the first type of position relationship that matches the third relative position may be a left-right relationship.

In some examples, the device A 210 may first determine the microphone group A and the microphone group B, the relative position between the determined microphone group A and the determined microphone group B is the third relative position, and the type of position relationship that matches the third relative position is the first type of position relationship. Alternatively, in some other examples, the device A 210 may first determine the first type of position relationship, and then determine the microphone group A and the microphone group B based on the first type of position relationship, where the relative position between the microphone group A and the microphone group B is the third relative position.

In some examples, the device A 210 stores a plurality of pairs of microphone groups, each pair of microphone groups includes two microphone groups that are respectively on two sides of a plane, and the device A 210 may determine the microphone group A and the microphone group B from the plurality of pairs of microphone groups.

In some examples, the device A 210 groups all or some of the at least three microphones included in the device A 210, to determine the microphone group A and the microphone group B.

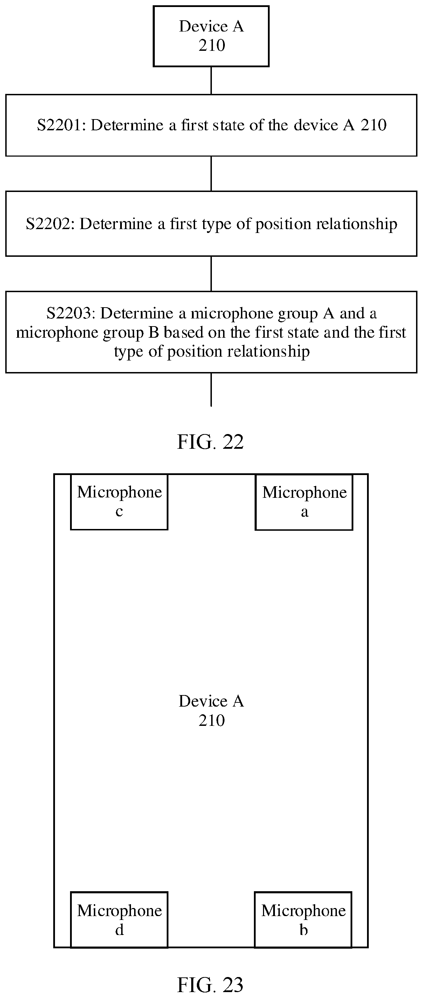

It should be noted that, for a manner in which the device A 210 determines the microphone group A and the microphone group B, refer to the following method shown in FIG. 22.

It should be further noted that a manner in which the device A 210 performs S1902 to determine the microphone group A and the microphone group B may be similar to the manner in which the device A 210 performs S1202 to determine the speaker group A and the speaker group B.

It should be further noted that S1902 is an optional step.

S1903: The device B 220 sends a sound signal A and a sound signal B.

In some examples, when determining the microphone group A and the microphone group B, the device A 210 may send a third request to the device B 220, where the third request is used to request to send the sound signal A and the sound signal B, and the device B 220 sends the sound signal A and the sound signal B when receiving the third request. Alternatively, in some other examples, the device B 220 may first send the sound signal A and the sound signal B, and send a first request to the device A 210. The device A210 performs S1901 when receiving the first request.

In some examples, the device B 220 may send the sound signal A and the sound signal B through one speaker (for example, the speaker e). Alternatively, in some other embodiments, the device B 220 includes a plurality of speakers, and a distance between the plurality of speakers may be ignored. For example, the plurality of speakers are different speaker units in a same speaker array, and duration required for transmitting a same sound signal from each speaker unit to a same microphone is almost the same. In this case, the device B 220 may send the sound signal A and the sound signal B through more than one of the plurality of speakers.

In some examples, the device B 220 may send first configuration information to the device A 210. For the first configuration information and a manner of sending the first configuration information, refer to related descriptions in S1202.

S1904: The device A 210 determines a first relative position between the device A 210 and the device B 220 based on an arrival moment 1 at which the sound signal A is received through the microphone group A and an arrival moment 2 at which the sound signal B is received through the microphone group B.

Because the device A 210 receives the sound signal A and the sound signal B through the microphone group A and the microphone group B that are in the first relative position, the device A 210 may determine, based on the arrival moment 1 at which the sound signal A is received and the arrival moment 2 at which the sound signal B is received, a value between propagation duration TA of the sound signal A and propagation duration TB of the sound signal B, to determine a distance between the device B 220 and the microphone group A and a distance between the device B 220 and the microphone group B. Then, the first relative position between the device A 210 and the device B 220 is accurately determined based on the third relative position between the microphone group A and the microphone group B and the first type of position relationship. The first relative position matches the first type of position relationship.

It should be noted that a manner in which the device A 210 identifies the sound signal A and the sound signal B and a manner in which the device A 210 determines the first relative position between the device A 210 and the device B 220 based on the arrival moment 1 and the arrival moment 2 may be the same as or similar to the manner in which the device B 220 identifies the sound signal A and the sound signal B in S1204 and the manner in which the device B 220 determines the first relative position between the device A 210 and the device B 220 based on the arrival moment 1 and the arrival moment 2. Details are not described herein again.

S1905: The device A 210 sends the first relative position to the device B 220.

S1905 is an optional step.

In this embodiment of this application, the device A 210 may determine the microphone group A and the microphone group B in response to detecting the second event, where the third relative position between the microphone group A and the speaker group B matches the first type of position relationship. When the device B 220 sends the first sound signal and the second sound signal, the device A 210 receives the sound signal A through the microphone group A, receives the sound signal B through the microphone group B, and determines, based on the arrival moment 1 at which the sound signal A is received and the arrival moment 2 at which the sound signal B is received, the first relative position that is between the device A 210 and the device B 220 and that matches the first type of position relationship. In other words, the relative position between the devices is detected through an electroacoustic transducer without relying on a component like a radar. This reduces costs of detecting the relative position between the devices.

In some examples, when performing S1904 to receive the sound signal A and the sound signal B, the device A 210 may continuously receive the sound signal A and the sound signal B until the second event is detected next time. In some examples, the device A 210 may stop receiving the sound signal A and the sound signal B after third preset duration since performing S1904 to start to receive the sound signal A and the sound signal B. Certainly, in actual application, the device A 210 may alternatively determine, in another manner, an occasion for stopping receiving the sound signal A and the sound signal B. For example, the device A 210 may stop receiving the sound signal A and the sound signal B when determining the first relative position between the device A 210 and the device B 220.

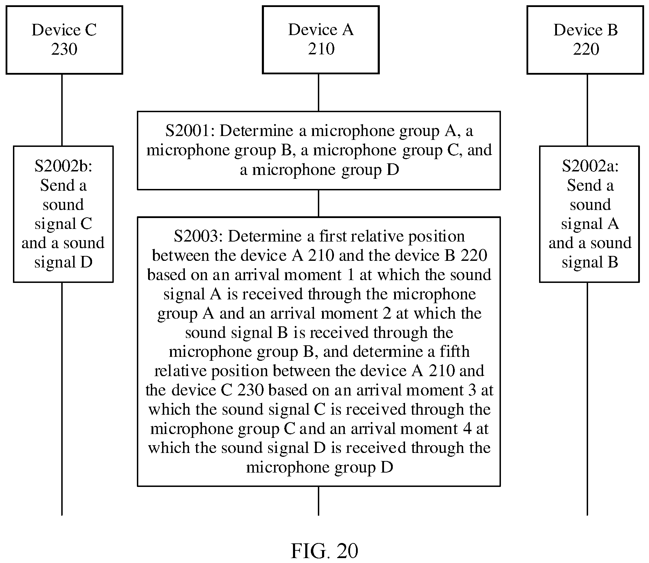

FIG. 20 is a flowchart of a method for detecting a relative position between devices according to an embodiment of this application. The method may be applied to the system shown in any one of FIG. 7 to FIG. 9. The device A 210 may receive a plurality of groups of sound signals through a plurality of pairs of microphone groups, so that relative positions between the device A 210 and devices in a plurality of different positions such as the device B 220 and the device C 230 can be determined. It should be noted that the method is not limited to a specific sequence described in FIG. 20 and below. It should be understood that in another embodiment, a sequence of some steps in the method may be exchanged based on an actual requirement, or some steps in the method may be omitted or deleted. The method includes the following steps.

S2001: The device A 210 determines a microphone group A, a microphone group B, a microphone group C, and a microphone group D.

The microphone group C and the microphone group D each may include at least one microphone, and a quantity of microphones included in the microphone group C and the microphone group D may be less than or equal to a total quantity of microphones included in the device A 210. The microphone group C and the microphone group D may be respectively on two sides of a plane, a relative position between the microphone group C and the microphone group D is a fourth relative position, and a type of position relationship that matches the fourth relative position is a second type of position relationship.

It should be noted that a third relative position is different from the fourth relative position, and the second type of position relationship is different from a first type of position relationship. For example, in the system shown in FIG. 9, the first type of position relationship between the microphone group A and the microphone group B is an above-below relationship, the third relative position is that the microphone group A is above the microphone group B, the second type of position relationship between the microphone group C and the microphone group D is a left-right relationship, and the fourth relative position is that the microphone group C is on the left side of the microphone group D.

It should be noted that, a manner in which the device A 210 determines the microphone group A and the microphone group B in S2001 may be similar to or the same as the manner of determining the microphone group A and the microphone group B from the plurality of microphones in S1901, and a manner in which the device A 210 determines the microphone group C and the microphone group D in S2001 may be similar to or the same as the manner of determining the microphone group A and the microphone group B from the plurality of microphones in S1901. Details are not described herein again.

It should be further noted that the microphone group A and the microphone group C or the microphone group D may include at most some same microphones, and the microphone group B and the microphone group C or the microphone group D may include at most some same microphones. For example, in the system shown in FIG. 9, both the microphone group A and the microphone group C include the microphone a, both the microphone group A and the microphone group D include the microphone b, both the microphone group B and the microphone group C include the microphone c, and both the microphone group B and the microphone group D include the microphone d.

S2002a: The device B 220 sends a sound signal A and a sound signal B.

In some examples, the device B 220 sends first configuration information to the device A 210. The first configuration information may indicate a sound feature of the sound signal A and a sound feature of the sound signal B. In this case, the device A 210 may identify the sound signal A based on the sound feature of the sound signal A, identify the sound signal B based on the sound feature of the sound signal B, and ignore a sound signal C and a sound signal D. Certainly, in actual application, the first configuration information may alternatively indicate other information. For example, the first configuration information may indicate a manner of sending the sound signal A and the sound signal B; and/or the first configuration information may indicate a sound emission moment 1 at which the sound signal A is sent and a sound emission moment 2 at which the sound signal B is sent.

It should be noted that a manner in which the device B 220 sends the sound signal A and the sound signal B in S2002a may be the same as the manner in which the device B 220 sends the sound signal A and the sound signal B in S1903.

S2002b: The device C 230 sends the sound signal C and the sound signal D.

In some examples, the device C 230 may send second configuration information to the device A 210. The second configuration information may indicate a sound feature of the sound signal C and a sound feature of the sound signal D. In this case, the device A 210 may identify the sound signal C based on the sound feature of the sound signal C, identify the sound signal D based on the sound feature of the sound signal D, and ignore the sound signal A and the sound signal B. Certainly, in actual application, the second configuration information may alternatively indicate other information. For example, the second configuration information may indicate a manner of sending the sound signal C and the sound signal D; and/or the first configuration information may indicate a sound emission moment 3 at which the sound signal C is sent and a sound emission moment 4 at which the sound signal D is sent.

In some examples, any two of the sound feature of the sound signal A, the sound feature of the sound signal B, the sound feature of the sound signal C, and the sound feature of the sound signal D are different, to help the device A 210 accurately identify the sound signal A, the sound signal B, C, and the sound signal D, so as to improve accuracy and efficiency of detecting relative positions between a plurality of devices.

It should be noted that a manner in which the device B 220 sends the sound signal C and the sound signal D in S2002b may be the same as the manner in which the device B 220 sends the sound signal A and the sound signal in S2002a.

S2003: The device A 210 determines a first relative position between the device A 210 and the device B 220 based on an arrival moment 1 at which the sound signal A is received through the microphone group A and an arrival moment 2 at which the sound signal B is received through the microphone group B, and determines a fifth relative position between the device A 210 and the device C 230 based on an arrival moment 3 at which the sound signal C is received through the microphone group C and an arrival moment 4 at which the sound signal D is received through the microphone group D.

The first relative position matches the first type of position relationship, and the fifth relative position matches the second type of position relationship.

It should be noted that, a manner in which the device A 210 determines the first relative position between the device A 210 and the device B 220 based on the arrival moment 1 at which the sound signal A is received through the microphone group A and the arrival moment 2 at which the sound signal B is received through the microphone group B may be the same as that the manner in which the device A 210 determines the first relative position between the device A 210 and the device B 220 based on the arrival moment 1 at which the sound signal A is received through the microphone group A and the arrival moment 2 at which the sound signal B is received through the microphone group B in S1904; and a manner in which the device A 210 determines the fifth relative position between the device A 210 and the device C 230 based on the arrival moment 3 at which the sound signal C is received through the microphone group C and the arrival moment 4 at which the sound signal D is received through the microphone group D may be similar to the manner in which the device A 210 determines the first relative position between the device A 210 and the device B 220 based on the arrival moment 1 at which the sound signal A is received through the microphone group A and the arrival moment 2 at which the sound signal B is received through the microphone group B in S1904. Details are not described herein again.

In this embodiment of this application, the device A 210 may receive a plurality of groups of sound signals through a plurality of groups of microphones, and relative positions between different groups of microphones correspond to different types of position relationships, so that the device A 210 can determine relative positions between the device A 210 and a plurality of devices in a plurality of types of position relationships. This greatly improves efficiency of detecting the relative positions between the devices.

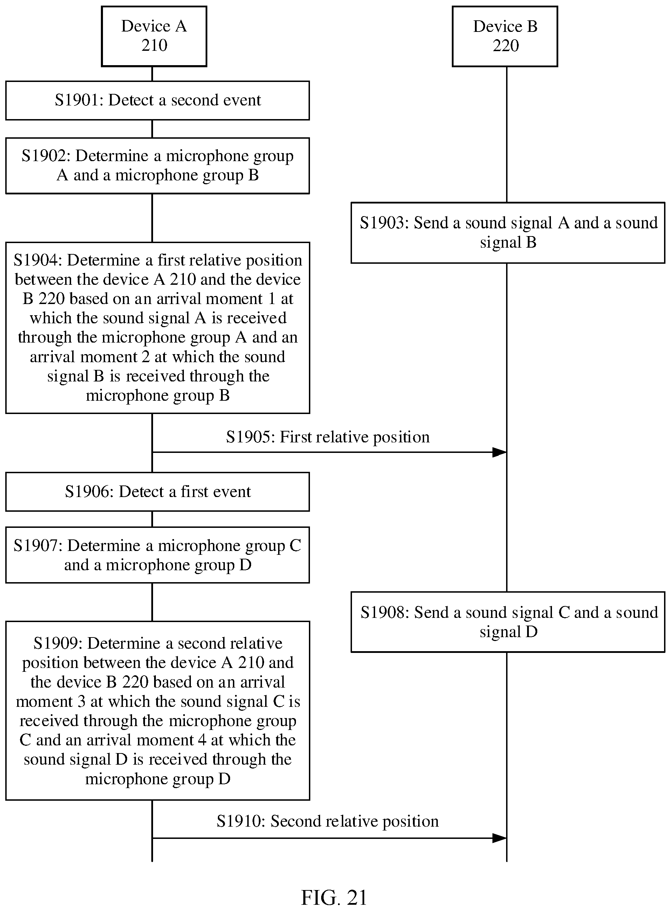

FIG. 21 is a flowchart of a method for detecting a relative position between devices according to an embodiment of this application. The method may be applied to the device A 210 in the system shown in any one of FIG. 7 to FIG. 9. The device A 210 may continue to perform the method shown in FIG. 21 after the method shown in FIG. 19, to change a sound signal receiving manner, so as to update the relative position between the device A 210 and the device B 220. It should be noted that the method is not limited to a specific sequence described in FIG. 23 and below. It should be understood that in another embodiment, a sequence of some steps in the method may be exchanged based on an actual requirement, or some steps in the method may be omitted or deleted. The method includes the following steps.

S1906: The device A 210 detects a first event.

The first event may be used to trigger the device A 210 to switch a sound receiving mode. In addition, it should be noted that the first event may be a preset event.

In some examples, the first event may include that a posture of the device A 210 changes.

In some examples, the first event may include that a posture of the device B 210 changes.

In some examples, the first event may include that a display mode of the device A 210 changes.

In some examples, the first event may include that the device A 210 receives a second request sent by the device B 220, where the second request is used to request the device A 210 to switch a sound receiving mode.

It should be noted that S1906 is an optional step. For example, in some examples, the device A 210 may continue to perform at least some of the following steps after second preset duration since performing S1904. It should be further noted that a manner of determining the second preset duration and a duration value of the second preset duration are not limited in embodiments of this application.

S1907: The device A 210 determines a microphone group C and a microphone group D.

The microphone group C and the microphone group D each may include at least one microphone, and a quantity of microphones included in the microphone group C and the microphone group D may be less than or equal to a total quantity of microphones included in the device A 210. The microphone group A and the microphone group B may be respectively on two sides of a plane, a relative position between the microphone group A and the microphone group B is a fourth relative position, and a type of position relationship that matches the fourth relative position is a second type of position relationship.

It should be noted that a third relative position is different from the fourth relative position, and the second type of position relationship is different from a first type of position relationship.

It should be further noted that a manner in which the device A 210 determines the microphone group C and the microphone group D in S1207 may be similar to or the same as the manner of determining the microphone group A and the microphone group B in S1902. Details are not described herein again.

S1908: The device B 220 sends a sound signal C and a sound signal D.

It should be noted that a manner in which the device B 220 sends the sound signal C and the sound signal D in S1908 may be the same as or similar to the manner in which the device B 220 sends the sound signal A and the sound signal D in S1903. Details are not described herein again.

S1909: The device A 210 determines a second relative position between the device A 210 and the device B 220 based on an arrival moment 3 at which the sound signal C is received through the microphone group C and an arrival moment 4 at which the sound signal D is received through the microphone group D.

It should be noted that a manner in which the device A 210 determines the second relative position between the device A 210 and the device B 220 based on the arrival moment 3 at which the sound signal C is received through the microphone group C and the arrival moment 4 at which the sound signal D is received through the microphone group D in S1909 may be similar to the manner in which the device A 210 determines the first relative position between the device A 210 and the device B 220 based on the arrival moment 1 at which the sound signal A is received through the microphone group A and the arrival moment 2 at which the sound signal B is received through the microphone group B in S1904. Details are not described herein again.

S1910: The device A 210 sends the second relative position to the device B 220.

It should be noted that S1910 is an optional step.

In this embodiment of this application, the device A 210 may switch the sound signal receiving manner in response to detecting the first event, so that the device B 220 and the device A 210 can update the relative position between the device B 220 and the device A 210. This improves accuracy of detecting the relative position between the device B 220 and the device A 210.

FIG. 22 is a flowchart of a microphone grouping method according to an embodiment of this application. The method may be applied to the device A 210 in the system shown in any one of FIG. 7 to FIG. 9. It should be noted that the method is not limited to a specific sequence described in FIG. 22 and below. It should be understood that in another embodiment, a sequence of some steps in the method may be exchanged based on an actual requirement, or some steps in the method may be omitted or deleted. The method includes the following steps.

S2201: The device A 210 determines a first state of the device A 210.

When the device A 210 is in different states, a relative position between microphones of the device A 210 on the device A 210 may be accordingly different. The device A 210 in FIG. 7 is used as an example. In FIG. 7, the microphone a and the microphone c are on the left side of the device A 210, and the microphone b and the microphone d are on the right side of the device A 210. When the device A 210 rotates clockwise by 90 degrees, the microphone c and the microphone d are on the left side of the device A 210, and the microphone a and the microphone b are on the right side of the device A 210, as shown in FIG. 23. Therefore, to help the device A 21 determine a current relative position between the microphones on the device A 210, the device A 210 may determine the first state.

The first state may indicate a state of the device A 210. In some examples, the first state of the device A 210 may include a first posture of the device A 210 or a first display mode of the device A 210.

S2202: The device A 210 determines a first type of position relationship.

The first type of position relationship may indicate a type of position relationship that matches the relative position between the device A 210 and the device B 220. When another device that is in the first type of position relationship with the device A 210 sends a sound signal, the device A 210 may receive the sound signal through a pair of microphone groups that match the first type of position relationship, and determine, based on the received sound signal, a specific relative position that is between the another device and the device A 210 and that matches the first type of position relationship.

It should be noted that, for a manner in which the device A 210 performs S2201 and S2202 to determine the first state and the first type of position relationship, refer to related descriptions in which the device A 210 performs S1501 and S1502 to determine the first state and the first type of position relationship.

S2203: The device A 210 determines a microphone group A and a microphone group B based on the first state and the first type of position relationship.

The device A 210 may accurately determine the microphone group A and the microphone group B based on the detected relative position that is between the device A 210 and the device B 220 and that is indicated by the first type of position relationship, an actually required relative position, and the relative position between the microphones on the device A 210 when the device A 210 is in the first state, where a third relative position between the microphone group A and the microphone group B matches the first type of position relationship.

The device A 210 in FIG. 7 is still used as an example. If the device A 210 receives the first request sent by the device B 220, and the first type of position relationship carried in the first request is the above-below relationship, the device A 210 may determine that two microphone groups that are in the above-below relationship need to be obtained through division. If the device A 210 is in a landscape mode, it may be determined, based on the landscape mode, that the microphone a and the microphone b are currently located above, and the microphone c and the microphone d are currently located below. Therefore, it is determined that the microphone group A includes the microphone a and the microphone b, and the microphone group B includes the microphone c and the microphone d.

The device A 210 shown in FIG. 23 is still used as an example. It is assumed that the first type of position relationship is still the above-below relationship. If the device A 210 is in a portrait posture, it may be determined, based on the portrait mode, that the microphone a and the microphone c are currently located above, and the microphone b and the microphone d are currently located below. Therefore, it is determined that the microphone group A includes the microphone a and the microphone c, and the microphone group B includes the microphone b and the microphone d.

In some examples, the device A 210 may store a correspondence between a display mode and a type of position relationship and a microphone group, and the correspondence includes the microphone group A and the microphone group B that correspond to the first display mode and the first type of position relationship. In this case, when determining the first display mode and the first target type of position relationship, the device A 210 may determine the microphone group A and the microphone group B from the correspondence.

In some examples, the device A 210 may store a correspondence between a posture and a type of position relationship and a microphone group, and the correspondence includes the microphone group A and the microphone group B that correspond to the first posture and the first type of position relationship. In this case, when determining the first posture and the first type of position relationship, the device A 210 may determine the microphone group A and the microphone group B from the correspondence.

In some examples, the device A 210 may store first coordinates of the microphones on the device A 210. The first coordinates may be coordinates of the microphones on the device A 210 when the device A 210 is in a preset second posture. The first coordinates may be understood as absolute coordinates of the microphones on the device A 210. When determining the first posture, the device A 210 may convert the first coordinates corresponding to the second posture into second coordinates corresponding to the first posture, where the second coordinates may be understood as relative coordinates corresponding to the first posture. When determining the second coordinates of the microphones, the device A 210 may determine the microphone group A and the microphone group B based on the second coordinates of the microphones and the first type of position relationship.

In this embodiment of this application, because the first type of position relationship may indicate a relative position between a pair of to-be-divided microphone groups, and the first state may be used to determine the relative position between the microphones currently included in the device A 210 on the device A 210, the device A 210 may accurately determine, based on the first state and the first type of position relationship, the microphone group A and the microphone group B that are in the first relative position from the plurality of microphones.

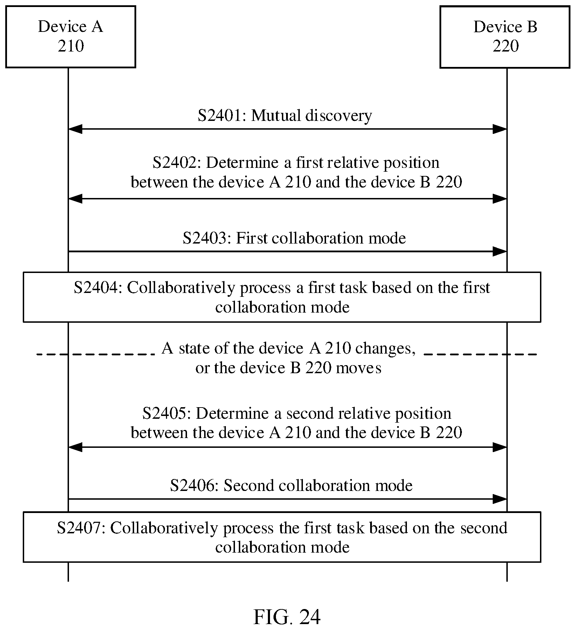

FIG. 24 is a flowchart of a multi-device collaborative task processing method according to an embodiment of this application. The plurality of devices may include a device A 210 and a device B 220. The device A 210 may be a tablet computer, and the device B 220 may be a mobile phone. It should be noted that in this embodiment of this application, only the device A 210 and the device B 220 are used as an example to describe a manner in which the plurality of devices collaboratively process a task, and specific content of the task, a quantity of devices that collaboratively process the task, and a device type are not limited. It should be further noted that the method is not limited to a specific sequence described in FIG. 24 and below. It should be understood that in another embodiment, a sequence of some steps in the method may be exchanged based on an actual requirement, or some steps in the method may be omitted or deleted. The method includes the following steps.

S2401: The device A 210 and the device B 220 discover each other.

The device A 210 and the device B 220 may discover each other through short-range communication such as Bluetooth and Wi-Fi, and a communication connection is established. In addition, it should be noted that a manner in which the device A 210 and the device B 220 discover each other is not limited in embodiments of this application.

S2402: The device A 210 and the device B 220 determine a first relative position between the device A 210 and the device B 220.

The device A 210 and the device B 220 may determine the first relative position between the device A 210 and the device B 220 according to the methods shown in FIG. 12 to FIG. 15 and related descriptions, or according to the methods shown in FIG. 19 to FIG. 22 and related descriptions.

S2403: The device A 210 notifies the device B 220 of a first collaboration mode.

The device A 210 may determine, based on the first relative position, the first collaboration mode corresponding to the first relative position, and notify the device B 220 of the first collaboration mode. The first collaboration mode may indicate a manner in which the device A 210 and the device B 220 run collaboratively when the device A 210 and the device B 22 are in the first relative position.

In some examples, the device A 210 stores a correspondence between a relative position and a collaboration mode, and obtains the corresponding first collaboration mode from the correspondence based on the first relative position. The correspondence between a relative position and a collaboration mode may be determined by the device A 210 in advance, and the correspondence includes a correspondence between the first relative position and the first collaboration mode. Certainly, in actual application, the device A 210 may alternatively determine, in another manner, the first collaboration mode corresponding to the first relative position. A manner of determining the first collaboration mode corresponding to the first relative position is not limited in embodiments of this application.

S2404: The device A 210 and the device B 220 collaboratively process a first task based on the first collaboration mode.

The first task may be any task. A type of the first task is not limited in embodiments of this application.

In some examples, when the relative position is that the device B 220 is on a left side of the device A 210, the device A 210 displays a first interface, and the device B 220 displays a second interface; or when the first relative position is that the device B 220 is on a right side of the device A 210, the device A 210 displays the first interface, and the device B 220 displays a third interface, where the second interface is associated with the first interface, and the third interface is associated with the first interface. In some examples, first display content included in the second interface may be at least some display content of second display content included in the second interface, to display details of the at least some display content, and/or be used by a user to edit the at least some display content. In some examples, third display content included in the third interface may be content associated with the second display content included in the second interface. For example, the third display content may be content such as a comment and an explanation of the second display content.

In some examples, the first interface may be a lower-level interface of the second interface (or the second interface is an upper-level interface of the first interface), and the third interface may be a lower-level interface of the first interface (or the first interface is an upper-level interface of the third interface). For any two interfaces, if the two interfaces include an upper-level interface and a lower-level interface (in some examples, the upper-level interface may also be referred to as a parent interface, and the lower-level interface may also be referred to as a child interface), the lower-level interface may be generated based on the upper-level interface or exist depending on the upper-level interface.

In some examples, when the first relative position is that the device B 220 is above the device A 210, the device A 210 displays a first interface, and the device B 220 displays a second interface; or when the first relative position is that the device B 220 is below the device A 210, the device A 210 displays the first interface, and the device B 220 displays a third interface.

It should be noted that, when relative positions between the device A 210 and the device B 220 are different, collaboration modes of the device A 210 and the device B 220 for processing the first task may be the same or may be different. In addition, in a specific relative position, a collaboration mode of the device A 210 and the device B 220 for collaboratively processing the first task may not be limited to the several modes mentioned in embodiments of this application.

S2405: The device A 210 and the device B 220 determine a second relative position between the device A 210 and the device B 220.

In some examples, the device A 210 and the device B 220 may perform S2405 to determine the second relative position between the device A 210 and the device B 220 when a state of the device A 210 changes or the device B 220 moves. Certainly, in actual application, the device A 210 and the device B 220 may alternatively determine the second relative position between the device A 210 and the device B 220 on another occasion.

S2406: The device A 210 notifies the device B 220 of a second collaboration mode.

S2407: The device A 210 and the device B 220 collaboratively process the first task based on the second collaboration mode.

It should be noted that, for operations performed by the device A 210 and the device B 220 in S2405 to S2407, refer to related descriptions in S2402 to S2404. Details are not described herein again.

It should be further noted that S2405 to S2407 are optional steps.

In this embodiment of this application, the device A 210 and the device B 220 may determine the first relative position between the device A 210 and the device B 220, to collaboratively process the first task based on the first collaboration mode corresponding to the first relative position, and collaboratively process the first task. In other words, a manner of collaboratively processing the first task corresponds to the first relative position. This improves reliability and user experience of collaboratively processing the first task. In addition, when the relative position between the device A 210 and the device B 220 changes to the second relative position, the device A 210 and the device B 220 may also collaboratively process the first task based on the second collaboration mode corresponding to the second relative position. That is, the manner in which the device A 210 and the device B 220 collaboratively process the first task may match the relative position between the device A 210 and the device B 220. This improves accuracy and flexibility of processing the first task, and further improves user experience.

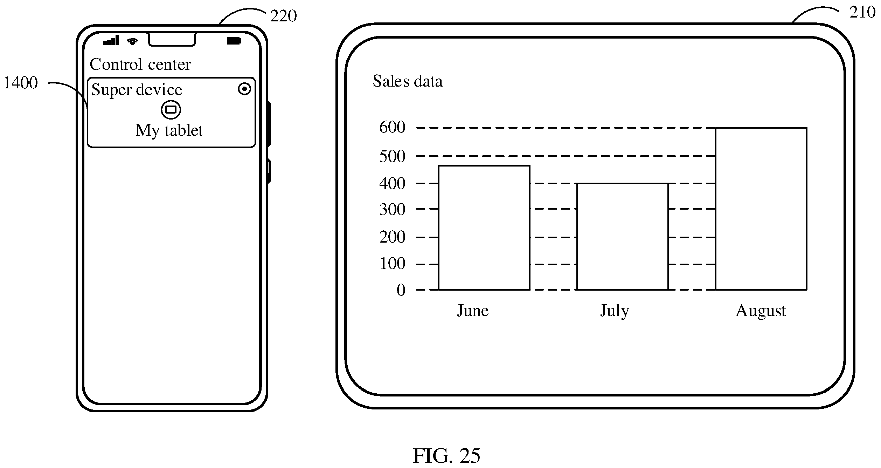

In the following, an example in which the device A 210 and the device B 220 collaboratively process a presentation is used to describe the method for detecting a relative position between devices and the multi-device collaborative task processing method that are provided in embodiments of this application. FIG. 25 to FIG. 30 are diagrams of a display interface according to an embodiment of this application.

As shown in FIG. 25, the device A 210 is currently processing a presentation separately. When the device B 220 moves to a range with a specific distance from the device A 210, the device B 220 discovers the device A 210, and displays an icon and a name "My tablet" of the device A 210 in a super device tab 1400 included in a control center interface.

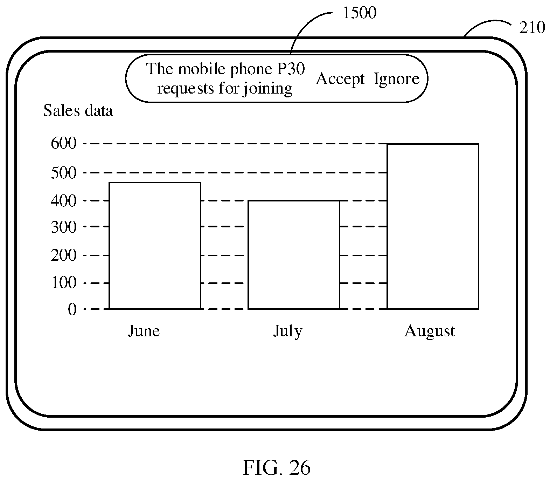

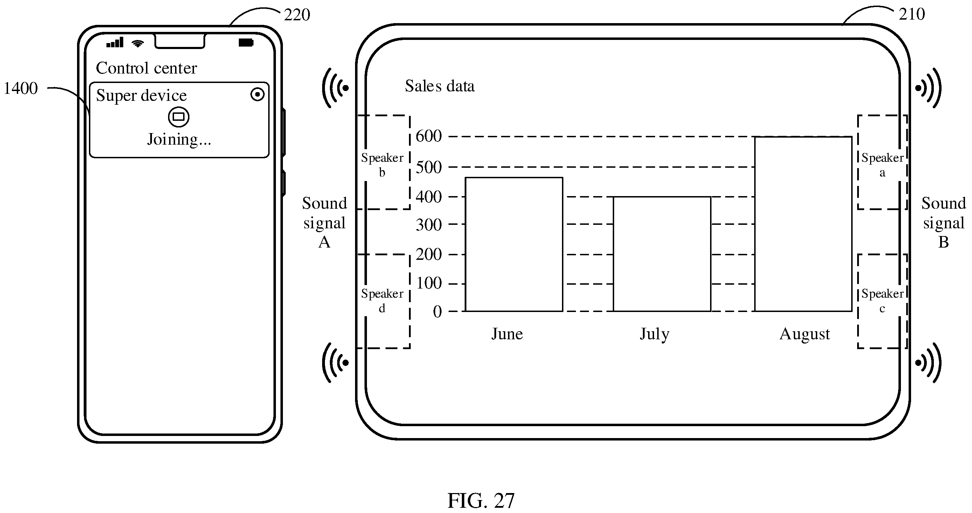

When the device B 220 receives a tap operation of a user based on the icon of the device A 210, the device B 220 sends a first request to the device A 210, to request to detect a relative position between the device A 210 and the device B 220. Further refer to FIG. 26. When receiving the first request, the device A 210 displays prompt information 1500, where the prompt information 1500 includes text information such as "The mobile phone P30 requests for joining", an accept button, and an ignore button. If the device A 210 receives a tap operation of the user based on the ignore button, the device A 210 ignores the prompt information. If the device A 210 receives a tap operation of the user based on the accept button, it is determined that a current first display mode of the device A 210 is a landscape mode, and it is determined, based on the landscape mode, that the first type of position relationship is a left-right relationship. Then, based on the landscape mode and the left-right relationship, speakers (namely, a speaker b and a speaker d) currently on a left side of the device A 210 are controlled to send a sound signal A, and speakers (namely, a speaker a and a speaker c) currently on a right side of the device A 210 are controlled to send a sound signal B, as shown in FIG. 27. The sound signal A may be a left-audio channel signal, and the sound signal B may be a right-audio channel signal. In addition, "joining..." is displayed below the icon of the device A 210 in the super device tab 1400 of the device B 220, to prompt the user that the first task processed by the device A 210 is being joined. The device B 220 determines, by receiving the sound signal A and the sound signal B, that the first relative position is that the device B 220 is on the left side of the device A 210, and sends the first relative position to the device A 210.

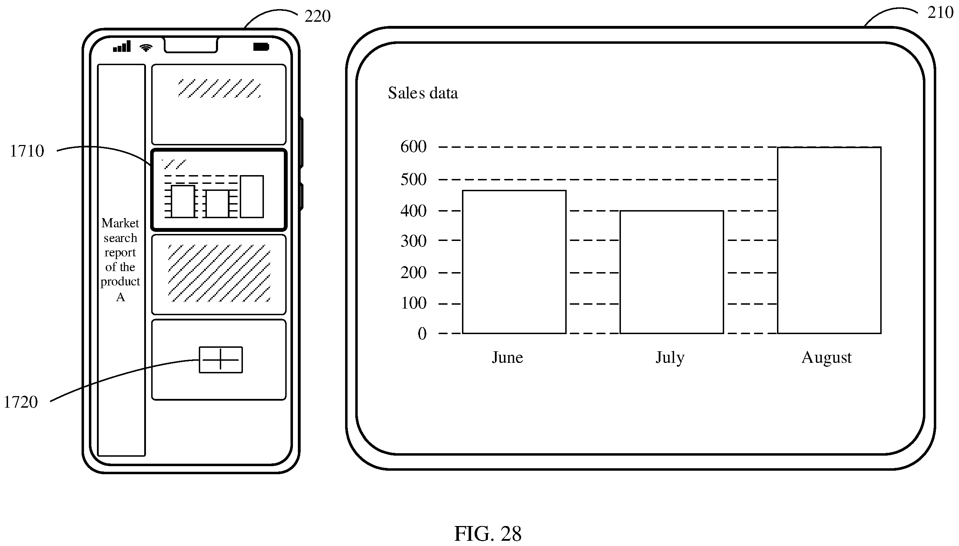

When the device B 220 is on the left side of the device A 210, the device A 210 determines that the corresponding first collaboration mode is displaying a table interface on the device B 220, and displaying document content of a specific page on the device A 210. A display mode of the device A 210 may be referred to as a preview mode, and a display mode of the device B 220 may be referred to as a tool mode. The device A 210 sends a table of the presentation to the device B 220, and the device B 220 receives and displays the table of the presentation, as shown in FIG. 28. It can be learned from FIG. 28 that the device A 210 is displaying a second page 1710 in the presentation. In addition, the interface displayed by the device B 220 may further include a new button 1720. When receiving a tap operation of the user based on the new button 1720, the device B 220 may insert content (such as a picture) specified by the user into the presentation, to add a new page.

Then, the user moves the device B 220 to the right side of the device A 210. The device B 220 detects that a posture of the device B 220 changes, and therefore sends a second request to the device A 210. When receiving the second request, the device A 210 sends the sound signal A again through speakers currently on the left side, and controls speakers currently on the right side of the device A 210 to send the sound signal B again. The device B 220 determines, based on the sound signal A and the sound signal B again, that the second relative position is that the device B 220 is on the right side of the device A 210, and sends the second relative position to the device A 210.

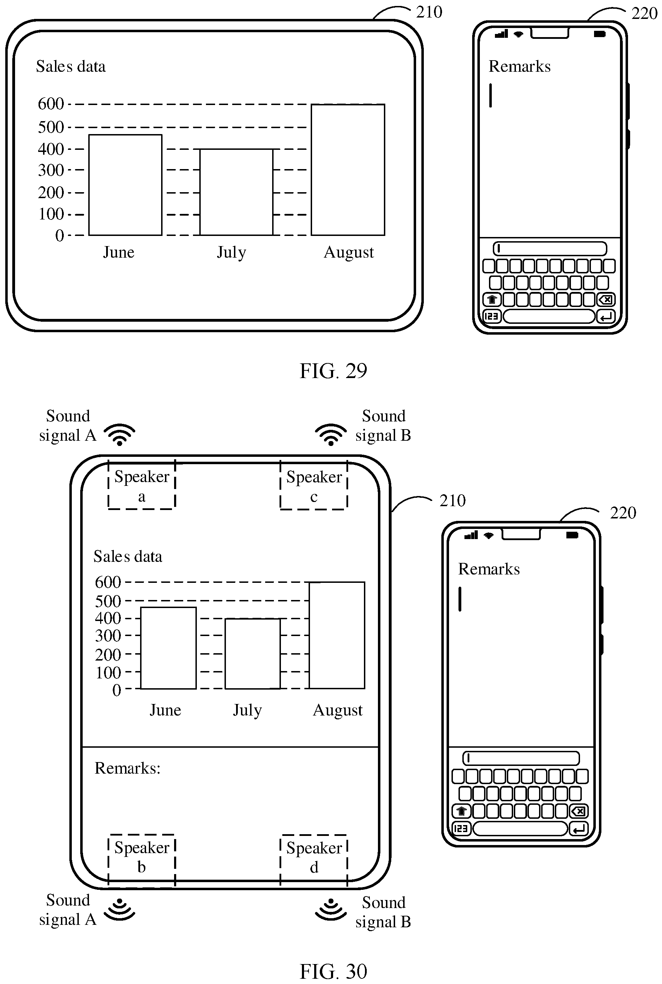

When the device B 220 is on the right side of the device A 210, the device A 210 determines that the second collaboration mode is displaying an upper-level interface on the device A 210, and displaying a lower-level interface on the device B 220. Therefore, a remark editing interface corresponding to a currently displayed page of the presentation is displayed on the device B 220, as shown in FIG. 29. A display mode of the device A 210 may be referred to as an editing mode, and a display mode of the device B 220 may be referred to as a preview mode. The device B 220 may receive, on the remark editing interface, remark information that is submitted by the user and corresponds to the page.

Then, the user flips the device A 210 by 90 degrees. As shown in FIG. 30, based on the posture change, the device A 210 switches to a portrait mode for display, plays the sound signal A again through speakers on the left side (namely, the speaker a and the speaker b), and plays the sound signal B again through speakers on the right side (namely, the speaker c and the speaker d). The sound signal A may be a left-audio channel signal, and the sound signal B may be a right-audio channel signal. The device B 220 determines, based on the sound signal A and the sound signal B again, that the second relative position is that the device B is on the left side of the device A, and sends the second relative position to the device A 210. The device A 210 determines, based on the second relative position, that the second collaboration mode is displaying, on the device B 220, a remark editing interface corresponding to a currently displayed page of the presentation, and synchronously displaying, on the device A 210, a page of the presentation and remark content added by the user on the device B 220, as shown in FIG. 30.

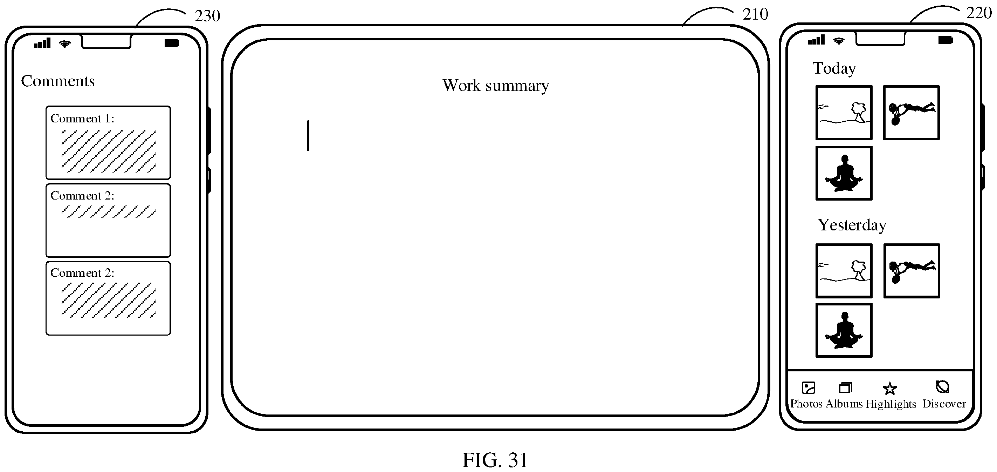

Alternatively, as shown in FIG. 31, the first task is a document editing task. The device A 210 may display a document editing page interface.

The device C 230 is on the left side of the device A 210, and the device C 230 may collaboratively display comments corresponding to a document edited by the device A 210. When the device C 230 receives a tap operation of the user based on any comment, the device A 210 may jump to a position of the comment. When receiving a comment newly submitted by the user, the device A 210 may send the comment to the device B 220 for display.

The device B 220 is on the right side of the device A 210. The device B 220 may collaboratively display an insertion tool interface. The device B 220 may receive, through the insertion tool interface, content submitted by the user, and insert the content into the document edited by the device A 210. For example, when receiving a tap operation of the user based on any image, the device B 220 may insert the image into the document edited by the device A 210.

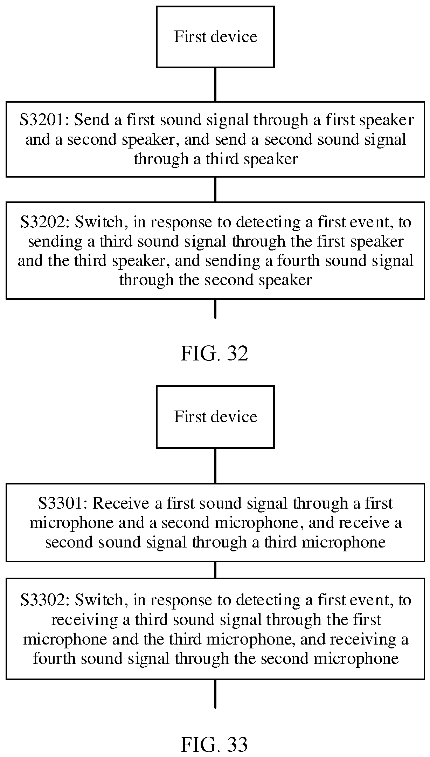

FIG. 32 is a flowchart of a method for sending a sound signal according to an embodiment of this application. The method may be applied to a first device. The first device includes at least a first speaker, a second speaker, and a third speaker, the first speaker and the second speaker are on a first side of a first plane, the third speaker is on a second side of the first plane, the first speaker and the third speaker are on a third side of a second plane, the second speaker is on a fourth side of the second plane, and the first plane is not parallel to the second plane. In some examples, the first device may be the device A 210 in FIG. 4 to FIG. 6, and the first speaker, the second speaker, and the third speaker may be any three of the speaker a, the speaker b, the speaker, and the speaker d. In some examples, the device A 210 in the methods shown in FIG. 12 to FIG. 15 and FIG. 24 may send a sound signal according to the method provided in this embodiment of this application, and the first device may implement at least some operations performed by the device A 210. It should be noted that the method is not limited to a specific sequence described in FIG. 32 and below. It should be understood that in another embodiment, a sequence of some steps in the method may be exchanged based on an actual requirement, or some steps in the method may be omitted or deleted. The method includes the following steps.

S3201: The first device sends a first sound signal through the first speaker and the second speaker, and sends a second sound signal through the third speaker.

In some examples, the first device further includes a fourth speaker, and the fourth speaker is on the second side of the first plane and on the fourth side of the second plane. The first device may send the first sound signal through the first speaker and the second speaker, and send the second sound signal through the third speaker and the fourth speaker. In some examples, the fourth speaker may be the remaining one of the speaker a, the speaker b, the speaker c, and the speaker d.

In some examples, the first speaker and the second speaker may be speakers in the foregoing speaker group A, the third speaker and the fourth speaker may be speakers in the foregoing speaker group B, the first sound signal may be the foregoing sound signal A, and the second sound signal may be the foregoing sound signal B. For a manner in which the first device sends the first sound signal through the first speaker and the second speaker, and sends the second sound signal through the third speaker (and the fourth speaker), refer to related descriptions in S1201 to S1203.

S3202: The first device switches, in response to detecting a first event, to sending a third sound signal through the first speaker and the third speaker, and sending a fourth sound signal through the second speaker.

In some examples, the first device further includes the fourth speaker, and the fourth speaker is on the second side of the first plane and on the fourth side of the second plane. The first device switches, in response to detecting the first event, to sending the third sound signal through the first speaker and the third speaker, and sending the fourth sound signal through the second speaker and the fourth speaker.

In some examples, the first speaker and the third speaker may be speakers in the foregoing speaker group C, the second speaker and the fourth speaker may be speakers in the foregoing speaker group D, the third sound signal may be the foregoing sound signal C, and the fourth sound signal may be the foregoing sound signal D. For a manner in which the first device switches, in response to detecting the first event, to sending the third sound signal through the first speaker and the third speaker, and sending the fourth sound signal through the second speaker (and the fourth speaker), refer to related descriptions in S1206 to S1208.

In some examples, at least one of the first sound signal and the second sound signal is the same as at least one of the third sound signal and the fourth sound signal.

In some examples, the first event includes at least one of the following: A posture of the first device changes; a display mode of the first device changes; the first device establishes a communication connection to a second device; the first device discovers the second device; the first device receives a first request sent by the second device, where the first request is used to trigger the first device to detect a relative position relationship between the first device and the second device; and the first device receives a second request sent by the second device, where the second request is used to trigger the first device to switch a sound emission mode.

The second device may be the device B 220 in FIG. 4 to FIG. 6, and the second device may implement at least some operations performed by the device B 220 in the methods shown in FIG. 12 to FIG. 15 and FIG. 24.

In some examples, a display of the first device includes a group of opposite longer edges and a group of opposite shorter edges, the first plane and the second plane are perpendicular to each other, and the first plane and the second plane are perpendicular to a plane on which the display is located. The first plane is parallel to the longer edge, and the second plane is parallel to the shorter edge. Alternatively, the first plane is parallel to the shorter edge, and the second plane is parallel to the longer edge. For example, the first plane and the second plane may be the plane a and the plane b in FIG. 2.

In this embodiment of this application, the first device includes at least the first speaker, the second speaker, and the third speaker. The first speaker and the second speaker are on the first side of the first plane, the third speaker is on the second side of the first plane, the first speaker and the third speaker are on the third side of the second plane, the second speaker is on the fourth side of the second plane, and the first plane is not parallel to the second plane. The first device may first send the first sound signal through the first speaker and the second speaker and send the second sound signal through the third speaker, and switch, in response to detecting the first event, to sending the third sound signal through the first speaker and the third speaker, and sending the fourth sound signal through the second speaker. In other words, in response to the first event, a relative position between speakers that send sound signals may be switched, so that a relative position between the first device and another device may be updated. This improves accuracy of detecting the relative position between the first device and the another device.

FIG. 33 is a flowchart of a method for receiving a sound signal according to an embodiment of this application. The method may be applied to a first device. The first device includes at least a first microphone, a second microphone, and a third microphone, the first microphone and the second microphone are on a first side of a first plane, the third microphone is on a second side of the first plane, the first microphone and the third microphone are on a third side of a second plane, the second microphone is on a fourth side of the second plane, and the first plane is not parallel to the second plane. In some examples, the first device may be the device A 210 in FIG. 7 to FIG. 9, and the first microphone, the second microphone, and the third microphone may be any three of the microphone a, the microphone b, the microphone, and the microphone d. In some examples, the device A 210 in the methods shown in FIG. 19 to FIG. 22 and FIG. 24 may receive a sound signal according to the method provided in this embodiment of this application, and the first device may implement at least some operations performed by the device A 210. It should be noted that the method is not limited to a specific sequence described in FIG. 33 and below. It should be understood that in another embodiment, a sequence of some steps in the method may be exchanged based on an actual requirement, or some steps in the method may be omitted or deleted. The method includes the following steps.

S3301: The first device receives a first sound signal through the first microphone and the second microphone, and receives a second sound signal through the third microphone.

In some examples, the first device further includes a fourth microphone, and the fourth microphone is on the second side of the first plane and on the fourth side of the second plane. The first device may receive the first sound signal through the first microphone and the second microphone, and receive the second sound signal through the third microphone and the fourth microphone. In some examples, the fourth microphone may be the remaining one of the microphone a, the microphone b, the microphone c, and the microphone d.

In some examples, the first microphone and the second microphone may be microphones in the foregoing microphone group A, the third microphone and the fourth microphone may be microphones in the foregoing microphone group B, the first sound signal may be the foregoing sound signal A, and the second sound signal may be the foregoing sound signal B. For a manner in which the first device sends the first sound signal through the first microphone and the second microphone, and sends the second sound signal through the third microphone (and the fourth microphone), refer to related descriptions in S1901 to S1903.

S3302: The first device switches, in response to detecting a first event, to receiving a third sound signal through the first microphone and the third microphone, and receiving a fourth sound signal through the second microphone.

In some examples, the first device further includes the fourth microphone, and the fourth microphone is on the second side of the first plane and on the fourth side of the second plane. The first device may switch, in response to detecting the first event, to sending the third sound signal through the first microphone and the third microphone, and sending the fourth sound signal through the second microphone and the fourth microphone.

In some examples, the first microphone and the third microphone may be microphones in the foregoing microphone group C, the second microphone and the fourth microphone may be microphones in the foregoing microphone group D, the third sound signal may be the foregoing sound signal C, and the fourth sound signal may be the foregoing sound signal D. For a manner in which the first device sends the third audio signal through the first microphone and the third microphone, and sends the fourth audio signal through the second microphone (and the fourth microphone), refer to related descriptions in S1906 to S1909.

In some examples, the first event includes at least one of the following: A posture of the first device changes; a display mode of the first device changes; the first device establishes a communication connection to a second device; the first device discovers the second device; the first device receives a first request sent by the second device, where the first request is used to trigger the first device to detect a relative position relationship between the first device and the second device; and the first device receives a second request sent by the second device, where the second request is used to trigger the first device to switch a sound receiving mode.

The second device may be the device B 220 in FIG. 7 to FIG. 9, and the second device may implement at least some operations performed by the device B 220 in the methods shown in FIG. 19 to FIG. 22 and FIG. 24.

In some examples, a display of the first device includes a group of opposite longer edges and a group of opposite shorter edges, the first plane and the second plane are perpendicular to each other, and the first plane and the second plane are perpendicular to a plane on which the display is located. The first plane is parallel to the longer edge, and the second plane is parallel to the shorter edge. Alternatively, the first plane is parallel to the shorter edge, and the second plane is parallel to the longer edge. For example, the first plane and the second plane may be the plane c and the plane d in FIG. 3.

In this embodiment of this application, the first device includes at least the first microphone, the second microphone, and the third microphone. The first microphone and the second microphone are on the first side of the first plane, the third microphone is on the second side of the first plane, the first microphone and the third microphone are on the third side of the second plane, the second microphone is on the fourth side of the second plane, and the first plane is not parallel to the second plane. The first device may first receive the first sound signal through the first microphone and the second microphone and receive the second sound signal through the third microphone, and switch, in response to detecting the first event, to receiving the third sound signal through the first microphone and the third microphone, and receiving the fourth sound signal through the second microphone. In other words, in response to the first event, a relative position between microphones that receive sound signals may be switched, so that a relative position between the first device and another device may be updated. This improves accuracy of detecting the relative position between the first device and the another device.

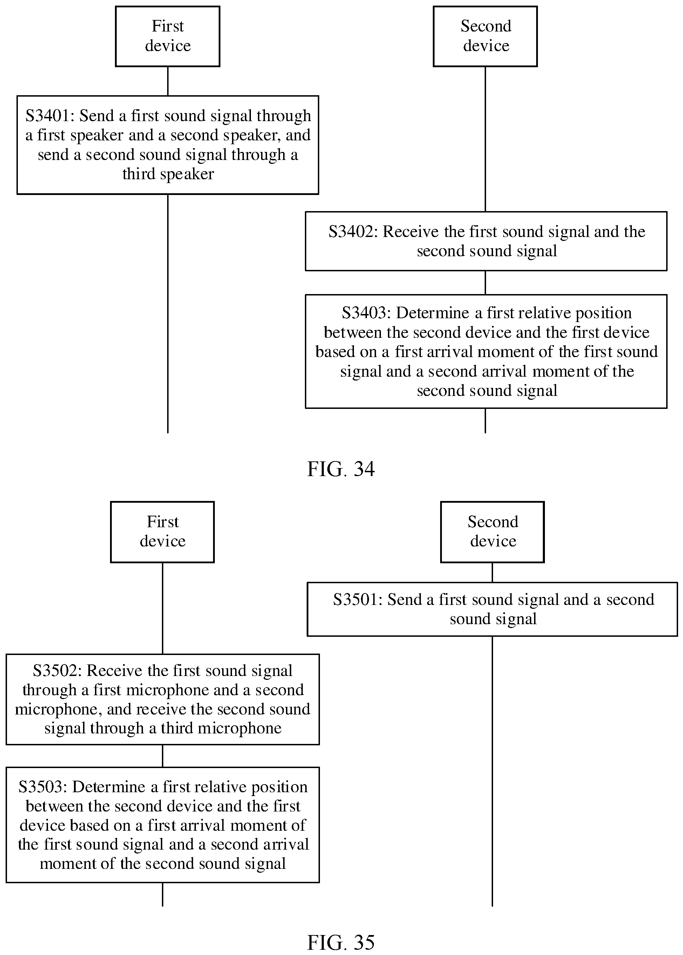

FIG. 34 is a flowchart of a method for detecting a relative position between devices according to an embodiment of this application. The method may be applied to a system including a first device and a second device. The first device includes at least a first speaker, a second speaker, and a third speaker, the first speaker and the second speaker are on a first side of a first plane, the third speaker is on a second side of the first plane, the first speaker and the third speaker are on a third side of a second plane, the second speaker is on a fourth side of the second plane, and the first plane is not parallel to the second plane. In some examples, the first device may be the device A 210 in FIG. 4 to FIG. 6, the first speaker, the second speaker, and the third speaker may be any three of the speaker a, the speaker b, the speaker, and the speaker d, and the second device may be the device B 220 in FIG. 4 to FIG. 6. The first device may implement at least some operations performed by the device A 210 in the methods shown in FIG. 12 to FIG. 15 and FIG. 24, and the second device may implement at least some operations performed by the device B 220 in the methods shown in FIG. 12 to FIG. 15 and FIG. 24. It should be noted that the method is not limited to a specific sequence described in FIG. 34 and below. It should be understood that in another embodiment, a sequence of some steps in the method may be exchanged based on an actual requirement, or some steps in the method may be omitted or deleted. The method includes the following steps.

S3401: The first device sends a first sound signal through the first speaker and the second speaker, and sends a second sound signal through the third speaker.

In some examples, in response to detecting a second event, the first device sends the first sound signal through the first speaker and the second speaker, and sends the second sound signal through the third speaker.

In some examples, the second event includes any one of the following: The first device establishes a communication connection to the second device; the first device discovers the second device; and the first device receives a first request sent by the second device, where the first request is used to trigger the first device to detect a relative position relationship between the first device and the second device.

In some examples, the first device may send the second sound signal through the third speaker and the fourth speaker.

S3402: The second device receives the first sound signal and the second sound signal.

S3403: The second device determines a first relative position between the second device and the first device based on a first arrival moment of the first sound signal and a second arrival moment of the second sound signal.

In some examples, the first speaker and the second speaker may be speakers in the foregoing speaker group A, the third speaker and the fourth speaker may be speakers in the foregoing speaker group B, the first sound signal may be the foregoing sound signal A, the second sound signal may be the foregoing sound signal B, the first arrival moment may be the arrival moment 1 of the sound signal A, and the second arrival moment may be the arrival moment 2 of the sound signal B.

In some examples, the first device switches, in response to detecting a first event, to sending a third sound signal through the first speaker and the third speaker, and sending a fourth sound signal through the second speaker. The second device receives the third sound signal and the fourth sound signal. The second device determines a second relative position between the second device and the first device based on a third arrival moment of the third sound signal and a fourth arrival moment of the fourth sound signal.

In some examples, the first event includes at least one of the following: A posture of the first device changes; a display mode of the first device changes; and the first device receives a second request sent by the second device, where the second request is used to trigger the first device to switch a sound emission mode.

In some examples, the first speaker and the third speaker may be speakers in the foregoing speaker group C, the second speaker and the fourth speaker may be speakers in the foregoing speaker group D, the third sound signal may be the foregoing sound signal C, the fourth sound signal may be the foregoing sound signal D, the third arrival moment may be the arrival moment 3 of the sound signal C, and the fourth arrival moment may be the arrival moment 4 of the sound signal D.

In some examples, the first device sends a third sound signal through the first speaker and the third speaker, and sends a fourth sound signal through the second speaker. The second device receives the third sound signal and the fourth sound signal. The third device determines a fifth relative position between the third device and the first device based on a third arrival moment of the third sound signal and a fourth arrival moment of the fourth sound signal. In some examples, the third device may be the device C 230, and the third device may implement at least some operations performed by the device C 230 in the methods shown in FIG. 13 to FIG. 15 and FIG. 24.

In this embodiment of this application, the first device includes at least the first speaker, the second speaker, and the third speaker. The first speaker and the second speaker are on the first side of the first plane, the third speaker is on the second side of the first plane, the first speaker and the third speaker are on the third side of the second plane, the second speaker is on the fourth side of the second plane, and the first plane is not parallel to the second plane. The first device may send the first sound signal through the first speaker and the second speaker, and send the second sound signal through the third speaker. The second device may receive the first sound signal and the second sound signal, and determine the first relative position between the second device and the first device based on the first arrival moment of the first sound signal and the second arrival moment of the second sound signal. In other words, a relative position between devices is accurately detected through a speaker and a microphone, without relying on a component like a radar. This reduces costs of detecting the relative position between the devices.

FIG. 35 is a flowchart of a method for detecting a relative position between devices according to an embodiment of this application. The method may be applied to a system including a first device and a second device. The first device includes at least a first microphone, a second microphone, and a third microphone, the first microphone and the second microphone are on a first side of a first plane, the third microphone is on a second side of the first plane, the first microphone and the third microphone are on a third side of a second plane, the second microphone is on a fourth side of the second plane, and the first plane is not parallel to the second plane. In some examples, the first device may be the device A 210 in FIG. 7 to FIG. 9, the first microphone, the second microphone, and the third microphone may be any three of the microphone a, the microphone b, the microphone, and the microphone d, and the second device may be the device B 220 in FIG. 7 to FIG. 9. The first device may implement at least some operations performed by the device A 210 in the methods shown in FIG. 19 to FIG. 22 and FIG. 24, and the second device may implement at least some operations performed by the device B 220 in the methods shown in FIG. 19 to FIG. 22 and FIG. 24. It should be noted that the method is not limited to a specific sequence described in FIG. 35 and below. It should be understood that in another embodiment, a sequence of some steps in the method may be exchanged based on an actual requirement, or some steps in the method may be omitted or deleted. The method includes the following steps.

S3501: The second device sends a first sound signal and a second sound signal.

In some examples, in response to detecting a second event, the first device receives the first sound signal through the first microphone and the second microphone, and receives the second sound signal through the third microphone.

In some examples, the second event includes any one of the following: The first device establishes a communication connection to the second device; the first device discovers the second device; and the first device receives a first request sent by the second device, where the first request is used to trigger the first device to detect a relative position relationship between the first device and the second device.

S3502: The first device receives the first sound signal through the first microphone and the second microphone, and receives the second sound signal through the third microphone.

S3503: The first device determines a first relative position between the second device and the first device based on a first arrival moment of the first sound signal and a second arrival moment of the second sound signal.

In some examples, the first microphone and the second microphone may be microphones in the foregoing microphone group A, the third microphone and the fourth microphone may be microphones in the foregoing microphone group B, the first sound signal may be the foregoing sound signal A, the second sound signal may be the foregoing sound signal B, the first arrival moment may be the arrival moment 1 of the sound signal A, and the second arrival moment may be the arrival moment 2 of the sound signal B.

In some examples, the second device sends a third sound signal and a fourth sound signal. The first device switches, in response to detecting the first event, to receiving the third sound signal through the first microphone and the third microphone, and receiving the fourth sound signal through the second microphone. The second device determines a second relative position between the second device and the first device based on a third arrival moment of the third sound signal and a fourth arrival moment of the fourth sound signal.

In some examples, the first event includes at least one of the following: A posture of the first device changes; a display mode of the first device changes; and the first device receives a second request sent by the second device, where the second request is used to trigger the first device to switch a sound receiving mode.

In some examples, the first microphone and the third microphone may be microphones in the foregoing microphone group C, the second microphone and the fourth microphone may be microphones in the foregoing microphone group D, the third sound signal may be the foregoing sound signal C, the fourth sound signal may be the foregoing sound signal D, the third arrival moment may be the arrival moment 3 of the sound signal C, and the fourth arrival moment may be the arrival moment 4 of the sound signal D.

In some examples, a third device sends a third sound signal and a fourth sound signal, and the first device receives the third sound signal through the first microphone and the third microphone, and receives the fourth sound signal through the second microphone. The second device determines a fifth relative position between the third device and the first device based on a third arrival moment of the third sound signal and a fourth arrival moment of the fourth sound signal. In some examples, the third device may be the device C 230, and the third device may implement at least some operations performed by the device C 230 in the methods shown in FIG. 19 to FIG. 22 and FIG. 24.

In this embodiment of this application, the first device includes at least the first microphone, the second microphone, and the third microphone. The first microphone and the second microphone are on the first side of the first plane, the third microphone is on the second side of the first plane, the first microphone and the third microphone are on the third side of the second plane, the second microphone is on the fourth side of the second plane, and the first plane is not parallel to the second plane. The second device may send the first sound signal and the second sound signal. The first device may receive the first sound signal through the first microphone and the second microphone, receive the second sound signal through the third microphone, and determine the first relative position between the second device and the first device based on the first arrival moment of the first sound signal and the second arrival moment of the second sound signal. In other words, a relative position between devices is accurately detected through a speaker and a microphone, without relying on a component like a radar. This reduces costs of detecting the relative position between the devices.

Based on a same inventive concept, an embodiment of this application further provides a terminal device. The terminal device includes a memory and a processor. The memory is configured to store a computer program. The processor is configured to perform, when invoking the computer program, operations performed by the device A 210 and/or the device B 220 in the method in the foregoing method embodiments.

The terminal device provided in this embodiment may perform the operations performed by the device A 210 and/or the device B 220 in the foregoing method embodiments. Implementation principles and technical effect are similar, and details are not described herein again.

Based on a same inventive concept, an embodiment of this application further provides a chip system. The chip system is disposed in a terminal device. The chip system includes a processor. The processor is coupled to a memory. The processor executes a computer program stored in the memory, to implement operations performed by the device A 210 and/or the device B 220 in the method in the foregoing method embodiments.

The chip system may be a single chip or a chip module including a plurality of chips.

An embodiment of this application further provides a computer-readable storage medium. The computer-readable storage medium stores a computer program. When the computer program is executed by a processor, operations performed by the device A 210 and/or the device B 220 in the method in the foregoing method embodiments are implemented.

An embodiment of this application further provides a computer program product. When the computer program product runs on a terminal device, the terminal device is enabled to implement operations performed by the device A 210 and/or the device B 220 in the method in the foregoing method embodiments.

When the integrated unit is implemented in a form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable storage medium may include at least any entity or apparatus that can carry computer program code to a photographing apparatus/terminal device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disc.

**In** the foregoing embodiments, the descriptions of each embodiment have respective focuses. For a part that is not described in detail or recorded in an embodiment, refer to related descriptions in other embodiments.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/ device and method may be implemented in other manners. For example, the described apparatus/device embodiments are merely examples. For example, division into the modules/units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that, when being used in the specification of this application and the appended claims, the term "include" indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if [a described condition or event] is detected" may be interpreted, depending on the context, to mean "once determined" or "in response to determining" or "once [the described condition or event] is detected" or "in response to detecting [the described condition or event]".

In addition, in the descriptions of the specification of this application and the appended claims, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or feature described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A method for sending a sound signal, applied to a first device, wherein the first device comprises at least a first speaker, a second speaker, and a third speaker;
the first speaker and the second speaker are on a first side of a first plane, the third speaker is on a second side of the first plane, the first speaker and the third speaker are on a third side of a second plane, the second speaker is on a fourth side of the second plane, and the first plane is not parallel to the second plane; and
the method comprises:
sending, by the first device, a first sound signal through the first speaker and the second speaker, and sending a second sound signal through the third speaker; and
switching, by the first device in response to detecting a first event, to sending a third sound signal through the first speaker and the third speaker, and sending a fourth sound signal through the second speaker.

2. The method according to claim 1, wherein the first device further comprises a fourth speaker, and the fourth speaker is on the second side of the first plane and on the fourth side of the second plane;
the sending, by the first device, a first sound signal through the first speaker and the second speaker, and sending a second sound signal through the third speaker comprises:
sending, by the first device, the first sound signal through the first speaker and the second speaker, and sending the second sound signal through the third speaker and the fourth speaker; and
the switching, by the first device in response to detecting a first event, to sending a third sound signal through the first speaker and the third speaker, and sending a fourth sound signal through the second speaker comprises:
switching, by the first device in response to detecting the first event, to sending the third sound signal through the first speaker and the third speaker, and sending the fourth sound signal through the second speaker and the fourth speaker.

3. The method according to claim 1 or 2, wherein at least one of the first sound signal and the second sound signal is the same as at least one of the third sound signal and the fourth sound signal.

4. The method according to any one of claims 1 to 3, wherein the first event comprises at least one of the following:
a posture of the first device changes;
a display mode of the first device changes;
the first device establishes a communication connection to a second device;
the first device discovers the second device;
the first device receives a first request sent by the second device, wherein the first request is used to trigger the first device to detect a relative position relationship between the first device and the second device; and
the first device receives a second request sent by the second device, wherein the second request is used to request to trigger the first device to switch a sound emission mode.

5. The method according to any one of claims 1 to 4, wherein a display of the first device comprises a group of opposite longer edges and a group of opposite shorter edges;
the first plane and the second plane are perpendicular to each other, and the first plane and the second plane are perpendicular to a plane on which the display is located; and
the first plane is parallel to the longer edge, and the second plane is parallel to the shorter edge; or the first plane is parallel to the shorter edge, and the second plane is parallel to the longer edge.

6. A method for receiving a sound signal, applied to a first device, wherein the first device comprises at least a first microphone, a second microphone, and a third microphone;
the first microphone and the second microphone are on a first side of a first plane, the third microphone is on a second side of the first plane, the first microphone and the third microphone are on a third side of a second plane, the second microphone is on a fourth side of the second plane, and the first plane is not parallel to the second plane; and
the method comprises:
receiving, by the first device, a first sound signal through the first microphone and the second microphone, and receiving a second sound signal through the third microphone; and
switching, by the first device in response to detecting a first event, to receiving a third sound signal through the first microphone and the third microphone, and receiving a fourth sound signal through the second microphone.

7. The method according to claim 6, wherein the first device further comprises a fourth microphone, and the fourth microphone is on the second side of the first plane and on the fourth side of the second plane;
the receiving, by the first device, a first sound signal through the first microphone and the second microphone, and receiving a second sound signal through the third microphone comprises:
receiving, by the first device, the first sound signal through the first microphone and the second microphone, and receiving the second sound signal through the third microphone and the fourth microphone; and
the switching, by the first device in response to detecting a first event, to sending a third sound signal through the first microphone and the third microphone, and sending a fourth sound signal through the second microphone comprises:
switching, by the first device in response to detecting the first event, to sending the third sound signal through the first microphone and the third microphone, and sending the fourth sound signal through the second microphone and the fourth microphone.

8. The method according to claim 6 or 7, wherein the first event comprises at least one of the following:
a posture of the first device changes;
a display mode of the first device changes;
the first device establishes a communication connection to a second device;
the first device discovers the second device;
the first device receives a first request sent by the second device, wherein the first request is used to trigger the first device to detect a relative position relationship between the first device and the second device; and
the first device receives a second request sent by the second device, wherein the second request is used to request to trigger the first device to switch a sound receiving mode.

9. The method according to any one of claims 6 to 8, wherein a display of the first device comprises a group of opposite longer edges and a group of opposite shorter edges;
the first plane and the second plane are perpendicular to each other, and the first plane and the second plane are perpendicular to a plane on which the display is located; and
the first plane is parallel to the longer edge, and the second plane is parallel to the shorter edge; or the first plane is parallel to the shorter edge, and the second plane is parallel to the longer edge.

10. A method for detecting a relative position between devices, applied to a system comprising a first device and a second device, wherein the first device comprises at least a first speaker, a second speaker, and a third speaker;
the first speaker and the second speaker are on a first side of a first plane, the third speaker is on a second side of the first plane, the first speaker and the third speaker are on a third side of a second plane, the second speaker is on a fourth side of the second plane, and the first plane is not parallel to the second plane; and
the method comprises:
sending, by the first device, a first sound signal through the first speaker and the second speaker, and sending a second sound signal through the third speaker;
receiving, by the second device, the first sound signal and the second sound signal; and
determining, by the second device, a first relative position between the second device and the first device based on a first arrival moment of the first sound signal and a second arrival moment of the second sound signal.

11. The method according to claim 10, wherein the sending, by the first device, a first sound signal through the first speaker and the second speaker, and sending a second sound signal through the third speaker comprises:
in response to detecting a second event, sending, by the first device, the first sound signal through the first speaker and the second speaker, and sending the second sound signal through the third speaker.

12. The method according to claim 11, wherein the second event comprises any one of the following:
the first device establishes a communication connection to the second device;
the first device discovers the second device; and
the first device receives a first request sent by the second device, wherein the first request is used to trigger the first device to detect a relative position relationship between the first device and the second device.

13. The method according to any one of claims 10 to 12, wherein the method further comprises:
notifying, by the second device, the first device of the first relative position.

14. The method according to claim 13, wherein the method further comprises:
collaboratively processing, by the first device and the second device, a first task in a first collaboration mode corresponding to the first relative position.

15. The method according to claim 14, wherein the collaboratively processing, by the first device and the second device, a first task in a first collaboration mode corresponding to the first relative position comprises:
when the first relative position is that the second device is on a left side of the first device, displaying, by the first device, a first interface, and displaying, by the second device, a second interface; or
when the first relative position is that the second device is on a right side of the first device, displaying, by the first device, the first interface, and displaying, by the second device, a third interface, wherein
the second interface is correlated with the first interface, and the third interface is correlated with the first interface.

16. The method according to any one of claims 10 to 15, wherein the method further comprises:
switching, by the first device in response to detecting a first event, to sending a third sound signal through the first speaker and the third speaker, and sending a fourth sound signal through the second speaker;
receiving, by the second device, the third sound signal and the fourth sound signal; and
determining, by the second device, a second relative position between the second device and the first device based on a third arrival moment of the third sound signal and a fourth arrival moment of the fourth sound signal.

17. The method according to claim 16, wherein the first event comprises at least one of the following:
a posture of the first device changes;
a display mode of the first device changes; and
the first device receives a second request sent by the second device, wherein the second request is used to trigger the first device to switch a sound emission mode.

18. The method according to claim 16 or 17, wherein at least one of the first sound signal and the second sound signal is the same as at least one of the third sound signal and the fourth sound signal.

19. The method according to any one of claims 10 to 18, wherein a first sound emission moment is the same as a second sound emission moment, and a sound feature of the first sound signal is different from a sound feature of the second sound signal; or
a first sound emission moment is different from a second sound emission moment, and a sound feature of the first sound signal is the same as a sound feature of the second sound signal, wherein
the first sound emission moment is a moment at which the first device sends the first sound signal, and the second sound emission moment is a moment at which the first device sends the second sound signal.

20. The method according to any one of claims 10 to 19, wherein a display of the first device comprises a group of opposite longer edges and a group of opposite shorter edges;
the first plane and the second plane are perpendicular to each other, and the first plane and the second plane are perpendicular to a plane on which the display is located; and
the first plane is parallel to the longer edge, and the second plane is parallel to the shorter edge; or the first plane is parallel to the shorter edge, and the second plane is parallel to the longer edge.

21. The method according to any one of claims 10 to 20, wherein the first sound signal and the second sound signal are ultrasonic signals.

22. A method for detecting a relative position between devices, applied to a system comprising a first device and a second device, wherein the first device comprises at least a first microphone, a second microphone, and a third microphone;
the first microphone and the second microphone are on a first side of a first plane, the third microphone is on a second side of the first plane, the first microphone and the third microphone are on a third side of a second plane, the second microphone is on a fourth side of the second plane, and the first plane is not parallel to the second plane; and
the method comprises:
sending, by the second device, a first sound signal and a second sound signal;
receiving, by the first device, the first sound signal through the first microphone and the second microphone, and receiving the second sound signal through the third microphone; and
determining, by the first device, a first relative position between the second device and the first device based on a first arrival moment of the first sound signal and a second arrival moment of the second sound signal.

23. The method according to claim 22, wherein the receiving, by the first device, the first sound signal through the first microphone and the second microphone, and receiving the second sound signal through the third microphone comprises:
in response to detecting a second event, receiving, by the first device, the first sound signal through the first microphone and the second microphone, and receiving the second sound signal through the third microphone.

24. The method according to claim 23, wherein the second event comprises any one of the following:
the first device establishes a communication connection to the second device;
the first device discovers the second device; and
the first device receives a first request sent by the second device, wherein the first request is used to trigger the first device to detect a relative position relationship between the first device and the second device.

25. The method according to any one of claims 22 to 24, wherein the method further comprises:
sending, by the second device, a third sound signal and a fourth sound signal;
switching, by the first device in response to detecting a first event, to receiving the third sound signal through the first microphone and the third microphone, and receiving the fourth sound signal through the second microphone; and
determining, by the second device, a second relative position between the second device and the first device based on a third arrival moment of the third sound signal and a fourth arrival moment of the fourth sound signal.

26. The method according to claim 25, wherein the first event comprises at least one of the following:
a posture of the first device changes;
a display mode of the first device changes; and
the first device receives a second request sent by the second device, wherein the second request is used to trigger the first device to switch a sound receiving mode.

27. A system, wherein the system comprises a first device and a second device, the first device comprises at least a first speaker, a second speaker, and a third speaker, the first speaker and the second speaker are on a first side of a first plane, the third speaker is on a second side of the first plane, the first speaker and the third speaker are on a third side of a second plane, the second speaker is on a fourth side of the second plane, and the first plane is not parallel to the second plane;
the first device is configured to: send a first sound signal through the first speaker and the second speaker, and send a second sound signal through the third speaker; and
the second device is configured to receive the first sound signal and the second sound signal; and the second device determines a first relative position between the second device and the first device based on a first arrival moment of the first sound signal and a second arrival moment of the second sound signal.

28. A system, wherein the system comprises a first device and a second device, the first device comprises at least a first microphone, a second microphone, and a third microphone, the first microphone and the second microphone are on a first side of a first plane, the third microphone is on a second side of the first plane, the first microphone and the third microphone are on a third side of a second plane, the second microphone is on a fourth side of the second plane, and the first plane is not parallel to the second plane;
the second device is configured to send a first sound signal and a second sound signal; and
the first device is configured to: receive the first sound signal through the first microphone and the second microphone, and receive the second sound signal through the third microphone; and the first device determines a first relative position between the second device and the first device based on a first arrival moment of the first sound signal and a second arrival moment of the second sound signal.

29. A terminal device, comprising a memory and a processor, wherein the memory is configured to store a computer program, and the processor is configured to perform the method according to any one of claims 1 to 5 or the method according to any one of claims 6 to 9 when invoking the computer program.

30. A computer-readable storage medium, wherein the computer-readable storage medium stores a computer program, and when the computer program is executed by a processor, the method according to any one of claims 1 to 5 or the method according to any one of claims 6 to 9 is implemented.

31. A computer program product, wherein when the computer program product runs on a terminal device, the terminal device is enabled to perform the method according to any one of claims 1 to 5 or the method according to any one of claims 6 to 9.
